# EUROPEAN PATENT APPLICATION

(11) **EP 1 589 520 A2**
(43) Date of publication of application: **26.10.2005**
(21) Application number: 05008794.9
(22) Date of filing: 21.04.2005
(51) Int. Cl.: G09G 5/00, G06F 3/14, G09F 19/22, G02B 27/06

(54) **Image-displaying apparatus**

(30) Priority: 23.04.2004 JP 2004128945; 18.02.2005 JP 2005043262
(71) Applicant: SONY CORPORATION, Tokyo 141-0001 (JP); Yamamoto, Masaomi, Yokohama-shi, Kanagawa 227-0044 (JP); Coder Electronics Corporation, Tokyo 165-0035 (JP)
(72) Inventor: Maruyama, Tetsuo, Shinagawa-ku Tokyo 141-0001 (JP); Yamamoto, Masaomi, Yokohama-shi Kanagawa 227-0044 (JP); Noma, Izumi, Nakano-ku Tokyo 165-0035 (JP)
(74) Representative: Melzer, Wolfgang

(57) **Abstract**

An image-displaying apparatus has a displaying device including plural displaying parts with the displaying parts being aligned without any space therebetween along the path of mobile object, a supplying device for supplying to the displaying device an image signal on plural still images constituting motion image, a speed-detecting device for detecting a running speed of the mobile object, and a display-controlling device for controlling the supplying device to display the plural still images, respectively, at their set timing on their set positions of the displaying device based on the running speed of the mobile object detected by the speed-detecting device. The image-displaying apparatus provides the motion image obtained by flashing the still images at a predetermined time interval along a path of the mobile object, thereby allowing a person who is travelling by the mobile object to view the motion image due to the still images.

## Description

### CROSS REFERENCES TO RELATED APPLICATIONS

The present invention contains subject matters related to Japanese Patent Applications JP 2004-128945 and JP 2005-43262 filed in the Japanese Patent Office on April 23, 2004 and February 18, 2005, respectively, the entire contents of which being incorporated herein by reference.

### BACKGROUND OF THE INVENTION

### Field of the Invention

The invention relates to an image-displaying apparatus. More particularly, it relates to the image-displaying apparatus and the like for allowing any person who is running by mobile object such as an electric train traveling on the rail and an elevator to view an image as a motion image or a still image.

### Related Art

An image-displaying apparatus and an image-displaying method have been proposed such that a passenger of the electric train can see motion image thorough the window of the train by displaying still images that the motion images are divided into plural frames on displaying devices arranged along the railroad of the train (see Japanese Patent Application Publication No. 2000-172220).

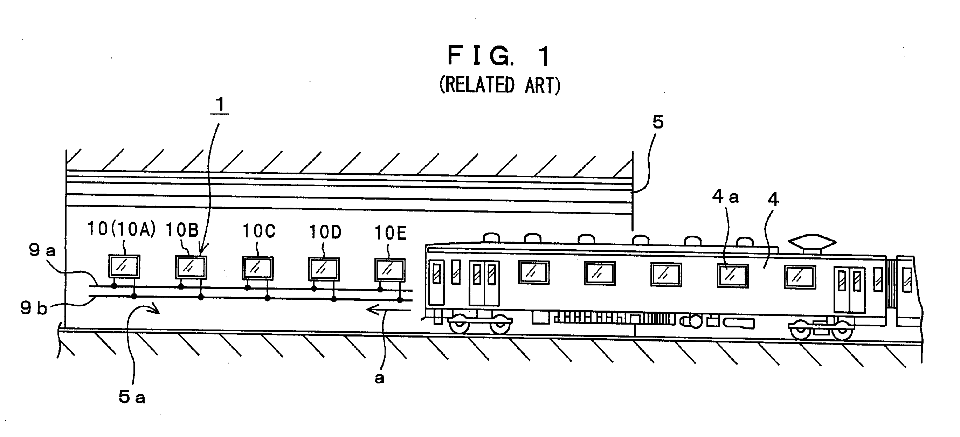

In this case, as shown in FIG. 1, the image-displaying devices are arranged on a wall surface of a tunnel with a predetermined space therebetween and they flash their still images of each frame constituting the motion image on their screen. This allows any passengers in the train travelling at a set speed to see frame advanced images.

In order to allow human being to see successive still images as motion image, it is necessary to have 24 frames per second in a case of movie film, 30 frames per second of NTSC standard or 25 frames per second of PAL standard in a case of television. Thus, it is necessary to have at least 24 frames per second to get an ordinary motion image.

For example, different spaces between LED display apparatuses (liquid crystal display apparatuses) to display the still images at 30 frames per second are necessary for separate travelling speeds of the electric train 4. If the electric train travels at a speed of 40 km/h, the space therebetween becomes 37 cm and if, at a speed of 60 km/h, the space becomes 53 cm.

However, in order for the passenger to view the still images on the displaying devices arranged along the railroad of the electric train 4 as the motion image through the window 4a of the train 4 in the image-displaying apparatuses disclosed in Japanese Patent Application Publication, it is necessary to keep the speed of the train 4 higher than a set one.

For example, when 90 items of the still images are used in order to see the still images as the motion image of 30 frames per second during three second, the rain 4's speed is a permissible range of 50 km/h from about +10km/h to -10 km/h. If the train 4 travels slower than that permissible range, the frames are displayed differently because the image-displaying devices for displaying the still images are arranged with a predetermined space. In other words, a period of time when the still image of each frame is being displayed is made longer or interval between two frames is made longer so that the images are discontinuous to be seen as unnatural motion image.

When the speed of the mobile object becomes a half speed, 25 km/h, the passenger can see 90 items of the still images during 6 seconds. This causes the passenger of the mobile object to view separate still images intermittently so that he or she prevents smooth motion images from being viewed continuously.

Thus, a period of time when the still image is being displayed is made longer so that a blur occurs and no smooth view of the motion image is obtained. Only the unsatisfied motion images can be obtained. This is because if still image of a frame flashes for a long time, when a next frame is seen, these two frames are seen at the same time based on the spectrum effect of eyes of human being, thereby actually making the images flown so that a blur occurs or overlapped images can be seen.

It is noted that if a display interval between the still images is made longer, images thus obtained are discontinuous so that unsatisfied motion images can be obtained.

Thus, when image-displaying devices are arranged with a predetermined space relative to a set travelling speed of the electric train 4, if the travelling speed of the electric train 4 is changed, it is difficult for any passenger to view the motion images naturally.

Therefore, an image-displaying apparatus for mobile object and an image-displaying method therefor have been also proposed such that stable image display of one frame can be performed according to a running speed of the mobile object during all the period of time when the mobile object passes through along an arranged section of image-displaying apparatus (see Japanese Patent Application Publication No. H11-202818).

In this case, timings for displaying the still images in the image-displaying devices are controlled based on a speed obtained by a first speed detector set on near a top of an array of the displaying devices and a speed obtained by a second speed detector set on near a tail end of the array of the image-displaying devices.

This allows timings for displaying the still images to be controlled according to the speed of the mobile object during almost all the period of time when the mobile object passes through along the arranged section of image-displaying apparatus. Even if the running speed of the mobile object varies on the way to passing through along the arranged section of image-displaying apparatus, it is possible to display the still images on the image-displaying devices at their display timing corresponding thereto, thereby making the images to be seen by a person in the mobile object stable.

If, however, the mobile object runs at a very slower speed (for example, a half speed, 25 km/h, of the running speed of the mobile object) than the assumed speed when the mobile object passes through along the arranged section of image-displaying apparatus, it is difficult to display the still images stably on the displaying devices. Alternatively, if the mobile object runs at a very higher speed than that thus assumed, it is also difficult to display the still image stably on the displaying devices.

Further, as shown Fig. 1, it is necessary that the still images and signal for flashing (light emission pulse) are distributed to each of the image-displaying devices 10 secured on a wall surface 5a of a tunnel 5 with them being aligned having a predetermined space therebetween toward a traveling direction "a" of the electric train 4. Thus, the image-displaying devices 10A, 10B, ..., 10N are connected with each other by two communication paths such as a data communication path (communication cable) 9a for distributing the still images and a communication path 9b for distributing flashing pulse.

In carrier sense multiple access with collision detection (CSMA/CD) based communication path such as ETHERNET, real time response or isochrony are not guaranteed. If the still images distributed to the displaying devices 10A, 10B, ..., 10N do not flash at the same time (in unison) to fail to time to flash them, the displayed images shakes so that unstable display images can occur.

Thus, besides the communication path 9a for distributing the still images, the communication path 9b for distributing flashing pulse is also provided. As the data communication path 9a, communication cable that is capable of being connected according to the transmission control protocol/internet protocol (TCP/IP) by ETHERNET, for example, is used. As the communication path 9b for distributing flashing pulse, communication cable such as RS 485 cable that is capable of being connected through a physical layer that is able to be multi-dropped.

In the past image-displaying apparatus, two communication paths (communication cables) are necessary for their connection with each other. This results in troublesome operation for communication path setting. In practice, it is necessary that (90 to 120) switching hubs are connected with them being cascaded to become a star connection, so that parts for connecting them are also necessary, thereby increasing the cost therefor.

### SUMMARY OF THE INVENTION

It is desirable to provide an image-displaying apparatus and an image-displaying method for implementing smooth view on motion images even when mobile object runs slowly and coping when mobile object runs rapidly.

According to an embodiment of the invention, there is provided image-displaying apparatus for providing motion image obtained by flashing still images at a predetermined time interval along a path of mobile object, thereby allowing a person who is travelling by the mobile object to view the motion image due to the still images. The apparatus has a displaying device including plural displaying parts with the displaying parts being aligned without any space therebetween along the path of mobile object, said displaying parts being positioned at sites where the person who is travelling by the mobile object is allowed to view the displaying parts from the mobile object. The apparatus also has a supplying device for supplying to the displaying device an image signal on plural still images constituting the motion image and a speed-detecting device for detecting a running speed of the mobile object. The apparatus further has a display-controlling device for controlling the supplying device to display the plural still images, respectively, at their set timing on their set positions of the displaying device based on the running speed of the mobile object detected by the speed-detecting device.

According to another embodiment of the invention, in an image-displaying apparatus, the display-controlling device controls the supplying device to sets as a reference speed a running speed of the mobile object when a distance that the mobile object runs for a period of time when image of one frame is displayed and a breadth of each of said still images are in a one-to-one relationship. If a running speed of the mobile object is smaller than the reference speed, the plural still images are displayed at their set timing with the images being shifted by smaller distance from each other than a distance that the mobile object runs at the reference speed, based on the running speed of the mobile object. If a running speed of the mobile object is larger than the reference speed, the plural still images are displayed at their set timing with the images being shifted by larger distance from each other than a distance that the mobile object runs at the reference speed, based on the running speed of the mobile object.

According to further embodiment of the invention, the displaying device allows for displaying the motion image due to an arbitrarily set breadth of the still images.

According to additional embodiment of the invention, the displaying device includes plural displaying parts with the displaying parts being aligned without any space therebetween along the path of mobile object. The displaying parts are constituted of liquid crystal display equipment, plasma display equipment, or organic electroluminescent display equipment.

According to still another embodiment of the invention, the displaying device includes plural projectors with screens of the projectors being aligned without any space therebetween along the path of mobile object.

According to still further embodiment of the invention, there is provided an image-displaying apparatus further having storage device for storing data of the still images. The data corresponds to plural programs. The data of the still images is supplied from the image-displaying apparatus or an outside distributor through a network.

According to still additional embodiment of the invention, there is provided an image-displaying apparatus further having selection device for selecting a program to be displayed from the plural programs. The display-controlling device controls the selection device to alter the image signal of the still images, supplied to the displaying device, for at least each unit of the program at a set period of time or an arbitrary period of time.

According to further embodiment of the invention, there is provided an image-displaying apparatus for providing motion image obtained by flashing still images at a predetermined time interval along a path of mobile object, thereby allowing a person who is travelling by the mobile object to view the motion image due to the still images. The apparatus has a displaying device including plural displaying parts with the displaying parts being aligned without any space therebetween along the path of mobile object. The displaying parts are positioned at sites where the person who is travelling by the mobile object is allowed to view the displaying parts from the mobile object.

The apparatus also has a supplying device for supplying to the displaying device an image signal on plural still images constituting the motion image. The apparatus further has a display-controlling device for controlling the supplying device to display the plural still images, respectively, at their set timing on their set positions of the displaying device based on information about a previously set running speed of the mobile object.

According to additional embodiment of the invention, there is provided an image-displaying method for displaying motion image in a displaying device for displaying the motion image obtained by supplying to the displaying device an image signal on plural still images constituting the motion image. This displaying device includes plural displaying parts that are aligned without any space therebetween along a path of mobile object by which a person is travelling. This allows a person who is travelling by the mobile object to view the motion image due to the still images. The method includes the steps of obtaining running speed information of the mobile object, and displaying the plural still images at their set timing with the images being shifted from each other by their set distances, based on the running speed information thus obtained of the mobile object.

In these embodiments according to the invention, plural displaying parts are positioned at sites where the person who is travelling by the mobile object is allowed to view the displaying parts from the mobile object with the displaying parts being aligned without any space therebetween along the path of mobile object. Further, the display-controlling device controls the supplying device to display the plural still images, respectively, at their set timing on their set positions of the displaying device based on the running speed of the mobile object. Thus, when displaying images, information on the running speed of the mobile object is obtained and the plural still images are respectively displayed at their set timing with the images being shifted from each other by their set distances, based on the running speed information thus obtained of the mobile object.

This enables the still images of second or later, which can be seen only when moving to their proper positions at the proper speed thereof, to be so displayed as to be done when the mobile object runs slowly. In this case, the still images of second, third, ..., n-th are displayed with them being drawn toward the first still image, respectively. Since relative speed in and out of the mobile object is increased, if the mobile object runs slowly, it is possible to implement a smooth and natural view of motion image due to the still images.

Determination to a display position of each of the still images to be displayed on the basis of the running speed of the mobile object allows for correspondence to a widespread speed from slow speed to high speed of the mobile object. This also allows stable image display to be implemented even if the running speed of the mobile object alters within an arranged section of the image-displaying apparatus.

Since plural displaying parts aligned along the path of mobile object are continuously positioned, it is possible to adjust the breadth of still image to be displayed at will, thereby relaxing any restriction of breadth of the still image and allowing for correspondence to both of standard image signal and wide image signal.

Alternatively, it is desirable to provide an image-displaying apparatus available for distributing information on still images and light-emission information through one communication path.

According to an embodiment of the invention, there is provided an image-displaying apparatus. The image-displaying apparatus has plural displaying devices each having a pass-through typed interface portion, and a pair of system control devices each for distributing at least still images constituting motion image to each of the plural displaying devices. It is noted that an interface portion through which any information can be passed bidirectionally is hereinafter referred to as the "pass-through typed interface portion". The system control devices are positioned at a starting end and a terminating end of these plural displaying devices. The plural displaying devices and the system control devices are daisy-chained to each other and the pass-through typed interface portion serves as fixed delay element under its cut-through operating condition.

In this embodiment according to the invention, the plural displaying devices are positioned with them having a set space therebetween. As one example, a seamless system such that image-displaying parts including liquid crystal display (LCD) are aligned without any space between the adjacent parts is adopted. These displaying devices are secured to any sites in a wall surface of tunnel, for example. The sites are faced with a mobile object passing through it, as described above. The system control devices are also positioned at a starting end and a terminating end of an array of these plural displaying devices. The plural displaying devices and the system control devices are connected to each other through one daisy-chained communication path (for example, a communication cable such as a 1000Base-T cable).

The system control devices distributes the still images to each of the displaying devices. At the same time, it also distributes light-emission information on the displaying devices. Each of the system control devices is provided with a detection sensor for detecting a running speed of the mobile object. An interval of light emission (flashing timing) of the displaying devices is computed based on the speed output thus detected.

Each of the displaying devices has the pass-through typed interface portion in order to keep a real time response of the distributed information maintained and to allow the displaying devices to be daisy-chained, thereby decreasing the communication path to one.

The pass-through typed interface portion has two or three ports. Referring to the interface portion having two ports, when it is determined that information received at a port is not destined for its own displaying device, the pass-through typed interface portion serves as delay element for sending the information received out of the other port as it is. In other words, the pass-through typed interface portion serves (operates) as fixed delay element under its cut-through operating condition.

Thus, if the distributed information is destined for its own displaying device, this displaying device receives the information. If, however, the distributed information is not destined for its own displaying device, the information is sent from input port to output port as it is. In other words, if the distributed information is not relative to its own displaying device, the pass-through typed interface portion serves as merely a delay element. Delay time for this is fixed. Thus, by using these two ports, two-way communication (full duplex transmission) is allowed.

When the fixed delay time is Dn, a total time of delay when the mobile object passes from a first displaying device through m-th displaying device is computed as an equation of m*Dn. A passenger in the mobile object can view the motion image or the still image by simultaneously flashing (lighting) the displaying devices in unison. For using the simultaneous flashing, a common light-emission signal (pulse signal) is simultaneously distributed to the plural displaying devices and in each of the displaying devices thus distributed, the flashing is controlled so that the light-emission signal can be delay by a total delay time from a period of time when it receives the light-emission signal to a period of time when the light-emission signal reaches to its own displaying device. In this case, the first displaying device to which the light-emission signal is first distributed (that is, a nearest displaying device to the system control device of the distributed side) has longest waiting time from a period of time when it receives the light-emission signal to a period of time when light emits. The last displaying device positioned near at the system control device of the reception side has waiting time of zero or Dn minutes.

By taking into consideration such the delay time (light emission waiting time), plural displaying devices are controlled so that they can be simultaneously flashed irrespective of numbers thereof, thereby keeping real time response of the information and isochrony thereof maintained. Since if the information received at a port is necessary for its own displaying device, this distribution is acceptable, but if not, the information received at a port is sent out of the other port as it is, the information on the still images and the light-emission information can be distributed to all of the plural displaying devices through one communication path that is daisy-chained.

As a precondition to distribute the information on the still images or the like, the overall system is initialized and various kinds of processing for obtaining information are carried out during performing motion image processing (during the distribution thereof).

As an initialization, identification processing for applying to each of the plural displaying devices their identification may be performed. This equals to application of a media access control (MAC) address thereto. The MAC address is available for an image-displaying apparatus including the pass-through typed interface portion that has three ports, particularly. In such the image-displaying apparatus having three ports, one of the ports is connected to CPU board or the like so that in addition to IP address that is applied to the CPU board, MAC address is also applied, thereby allowing the displaying devices to communicate with the system control devices and another network that is connected relative to the system control devices using these addresses.

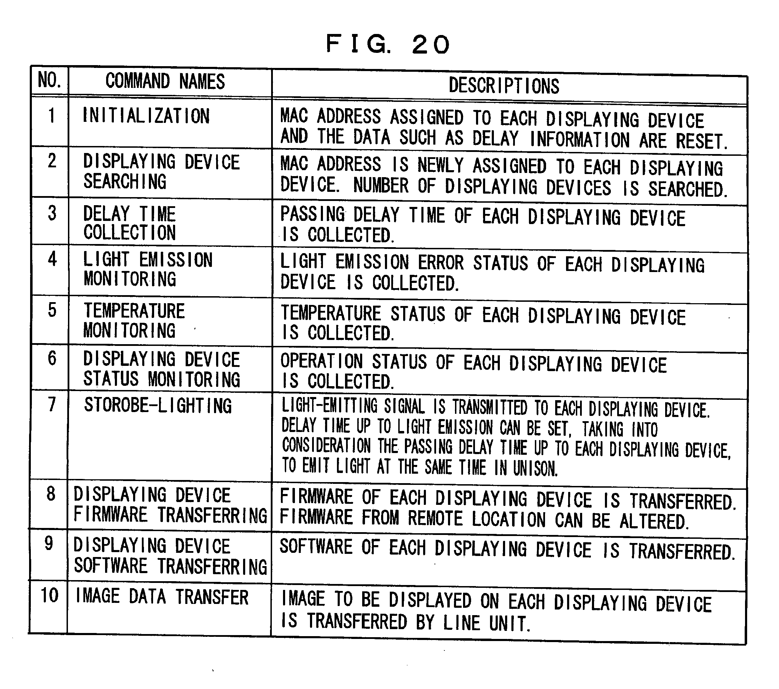

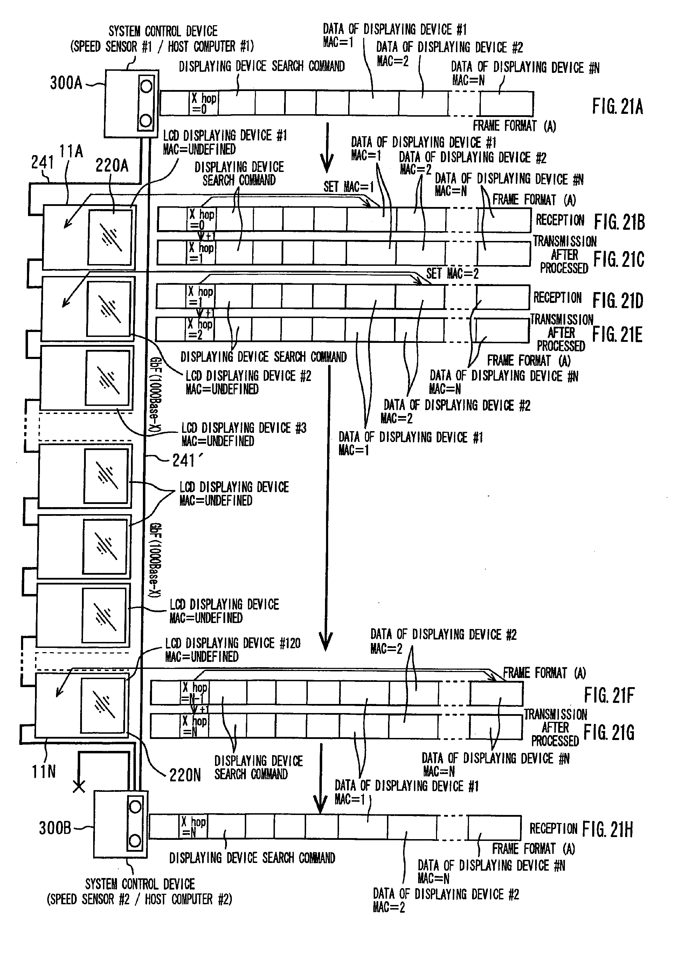

According to another embodiment of the invention, user datagram protocol/internet protocol (UDP/IP) available for a real time response as transport layer on Ethernet is used. Information on initialization setting and various kinds of necessary command information during operation thereof are capsuled and the capsuled information is inserted into a header of a payload generated by the UDP protocol. Plural kinds of the command information are shown in Fig. 20, which will be described later. As one of them, a displaying-device-searching command for searching the displaying device may be used. When this command for searching the displaying device is inserted, user-set optional data for the displaying device is inserted by only the displaying device(s) to be displayed into a data portion of the payload together with the command information, so that a control frame may be generated.

Thus, in this embodiment according to the invention, various kinds of information (command information and the like) necessary for displaying images are inserted into a header (passing-though typed frame header) of the UDP payload. A frame form in which data for the displaying device or the like is inserted into the payload body may be adopted.

This allows the datagram that is be translated by the pass-through typed interface portion (later-described interface portion having three ports) itself to be processed even with hardware and software having ordinary TCP/IP protocol stack, thereby maintaining compatibility with the existing Ethernet and TCP/IP protocol.

According to further embodiment of the invention, such the data for displaying device is then linked to number of hop (hop number X) in the header. If the hop number X is Xi when the display device receives signal, i-th inserted data Di for the displaying device is used as a part of MAC address for its own displaying device and saved. That is, the data Di for the displaying device is used as a part of MAC address.

The hop number Xi is incremented by one to Xi+1 when the display device sends out the received signal, the number of hop Xi is newly set to Xi+1. I+1-th inserted data Di+1 for the displaying device is referred and it is saved as a part of MAC address for this displaying device.

Thus, at a stage of initialization setting, in place of data of serial number constituting MAC address, user setting data D (about three bytes) for the displaying device is used, namely, as a part of MAC address so that it can be set as MAC address separately and/or independently the displaying device. This allows relationship with displaying device to be avoided. If the displaying device is altered or newly changed, new MAC address can be applied to the overall system with ease.

As the processing for obtaining information during operation thereof, status information on light-emitting state, inner temperature, operation condition of displaying part, and the like is conceivable. Such the processing for obtaining information can be implemented by inserting a information collection command for collecting information into a header of payload with the hop number X being updated and the status information being inserted into a data portion of the payload by each of the displaying devices to send it out.

According to the embodiments of the invention, the plural displaying devices and the system control devices are daisy-chained to each other and the pass-through typed interface portion provided to each of the displaying devices serves as a fixed delay element under its cut-through operating condition.

Thus, as the displaying devices can serve as merely a fixed delay element, it is possible to keep its real time response maintained. Because of the fixed delay time, if controlling light-emitting timing in consideration of the delay time occurring from first displaying device to its own displaying device, the plural displaying devices can be controlled so that they can be simultaneously flashed in unison, thereby maintaining isochrony of light emitting time.

If the pass-through typed interface portion determines that the received information is destined for its own displaying device, it serves as a delay element by which the information received at a port is sent out of the other port as it is. The respective ports serve as input port and output port, so that the plural displaying devices and the system control devices can be connected to each other through the daisy-chained one communication path.

This enables the number of communication paths to be decreased by one. The desired numbers of the displaying devices can be daisy-chained without using any parts such as a switching hub, thereby simplifying setting operation and decreasing costs of the parts.

Using a moderately priced communication cable such as a 1000base-T cable that is relatively available allows high cost-performance, an increase in communication capacity, an expansion usage of the displaying device to be easily achieved.

The concluding portion of this specification particularly points out and directly claims the subject matter of the present invention. However, those skill in the art will best understand both the organization and method of operation of the invention, together with further advantages and objects thereof, by reading the remaining portions of the specification in view of the accompanying drawing(s) wherein like reference characters refer to like elements.

### BRIEF DESCRIPTION OF THE DRAWINGS

Fig. 1 is a diagram for illustrating an image-displaying apparatus according to related art when using the apparatus in a tunnel;
Fig. 2 is a diagram for illustrating an embodiment of an image-displaying apparatus according to the invention when using the apparatus in a tunnel;
Fig. 3 is a diagram for illustrating a configuration of an embodiment of the image-displaying apparatus according to the invention;
Fig. 4 is a diagram for illustrating a configuration of an embodiment of a displaying device according to the invention;
Fig. 5 is a diagram for illustrating a configuration of an embodiment of the control device according to the invention;
Fig. 6 is a table for illustrating an example of a list of programs;
Fig. 7 is a diagram for illustrating a case where still images of one frame are displayed on one LCD device;
Fig. 8 is a diagram for illustrating a case where the still images are displayed if the electric train travels at a half of a reference speed;
Fig. 9 is a diagram for illustrating a case where the still images are displayed if the electric train travels at a speed that is double the reference speed;
Fig. 10 is a diagram for illustrating a relationship between a speed and a display position when the still images are displayed at 24 frames per second;
Fig. 11 is a diagram for illustrating an example of display sequence;
Fig. 12 is a diagram for illustrates a flowchart indicating processing operations when the still images are displayed in the image-displaying apparatus;
Fig. 13 is a diagram for illustrating a configuration of an image data distribution system via a network;
Fig. 14 is a diagram for conceptually illustrating another embodiment of the image-displaying apparatus according to the invention;
Fig. 15 is a block diagram for conceptually illustrating a configuration of an embodiment of the displaying device;
Fig. 16 is a block diagram for conceptually illustrating another embodiment of the system control device according to the invention;
Fig. 17 is a block diagram for illustrating a configuration of a network interface in the system control device;
Fig. 18 is a block diagram for illustrating a configuration of an embodiment of the displaying device according to the invention;
Figs. 19A through 19C are diagrams each for illustrating a configuration of pass-through typed control frame;
Fig. 20 is a table for indicating an embodiment of the command information according to the invention;
Figs. 21A through 21H are diagrams each for illustrating a configuration of the control frame used when the displaying-device-searching command is inserted and MAC addresses are assigned to the respective displaying devices;
Figs. 22A though 22H are diagrams each for illustrating a configuration of the control frame used when the delay-time-measuring command is inserted;
Figs. 23A though 23H are diagrams each for illustrating a configuration of the control frame used when light emission command is inserted;
Figs. 24A and 24B are diagrams each for illustrating a configuration of the control frame used when image-data-transferring command is inserted;
Fig. 25 is a diagram for explaining a transfer order of the image data;
Fig. 26 is a diagram for illustrating a relationship the displaying devices and image data (frame) to be distributed thereto when the electric train travel at a reference speed;
Fig. 27 is a diagram for illustrating a relationship the displaying devices and image data (frame) to be distributed thereto when the electric train travel at a slower speed than the reference speed;
Fig. 28 is a diagram for illustrating a relationship the displaying devices and image data (frame) to be distributed thereto when the electric train travel at a faster speed than the reference speed;
Fig. 29 is a flowchart for indicating processing flow of the overall image-displaying apparatus of an embodiment according to the invention; and
Fig. 30 is a block diagram for illustrating further embodiment of the image-displaying apparatus having another pass-through typed interface portion;

### DETAILED DESCRIPTION OF PREFERRED EMBODIMENTS

Referring to the drawings, the invention will now be described in detail with reference to preferred embodiments of an image-displaying apparatus and the like according to the invention.

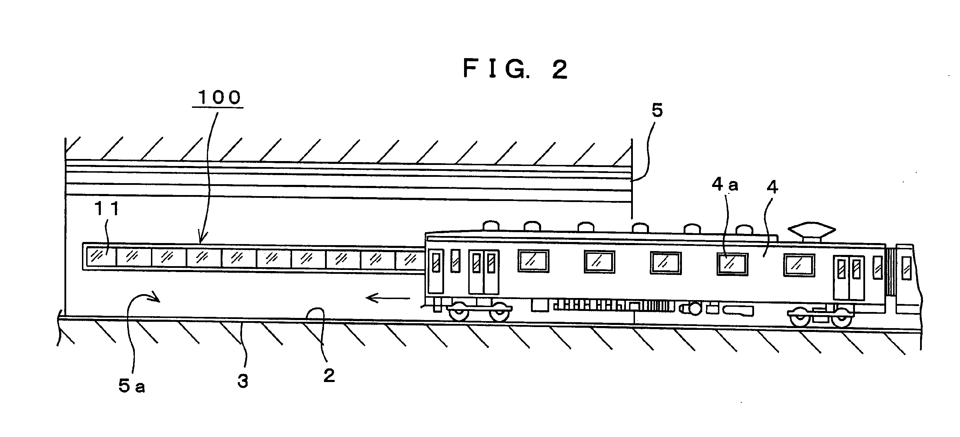

Fig. 2 illustrates an embodiment of the image-displaying apparatus according to the invention when using the apparatus in a tunnel. As shown in Fig. 2, a mobile object, an electric train 4 in this embodiment, by which a person can be travelling, travels on a travelling road 3 on which rails 2 are mounted. An image-displaying apparatus 100 including liquid crystal display (LCD) devices 11 constituted of plural LCD devices with them being aligned without any space therebetween is secured to points where the person who is travelling by the electric train 4 is allowed to view the still images from the electric train 4 through a window 4a, in a wall surface 5a of the tunnel 5 in which the travelling road 3 is formed according to this embodiment.

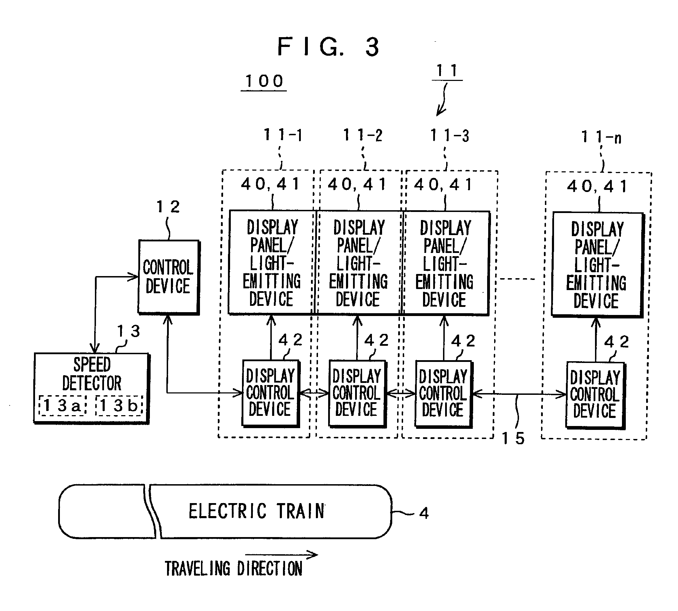

Fig. 3 illustrates a configuration of an embodiment of the image-displaying apparatus 100 according to the invention. As shown in Fig. 3, the image-displaying apparatus 100 includes displaying devices 11, control device 12, and a speed detector 13.

The displaying devices 11 are constituted of plural LCD devices 11-1, 11-2, ... , 11-n with them being aligned without any space therebetween along a path of the electric train 4.

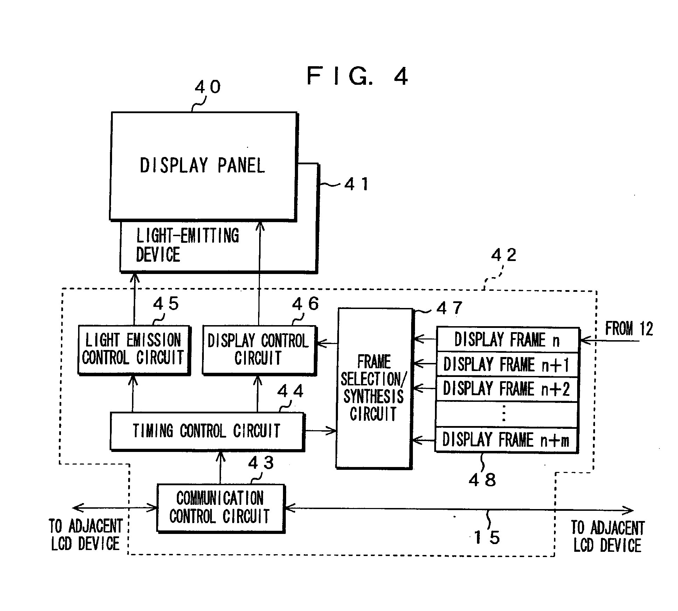

Fig. 4 illustrates a configuration of an embodiment of the LCD device according to the invention. Each of the LCD devices 11-1, 11-2, ..., 11-n has a display panel 40, light-emitting device 41, and display control device 42.

The display panel 40 includes LCD. This LCD is constituted of a reflective LCD and a translucent LCD, both cases of which are necessary for the light-emitting device 41 as flash luminous source. As the display panel 40, a display panel of translucent LCD having display screen of about 20 inches is illustratively used. The light-emitting device 41 uses strobe light, white light-emitting diode (LED) and the like. When using the translucent LCD, flashlight (strobe light) is used as backlight (indirect lighting device). When using the reflective LCD, strobe light is merely used as lighting device.

For example, if the flashlight is used as the light-emitting device 41, a driving circuit for the flashlight operates in response to a flash control signal represented by a predetermined duty ratio. If supplying time (display time) of still images and supply-stopping time of the still images are taken as t1 and t2, respectively, when intermittent display is performed so that their time relationship can become 100t1<t2, the flashlight turns on during only time of t1, but off during only time of t2.

The display control device 42 includes a communication control circuit 43, a timing control circuit 44, a light emission control circuit 45, a display control circuit 46, a frame selection/synthesis circuit 47, and a image storage section 48.

The communication control circuit 43 communicates with adjacent LCD devices 11-1, 11-2, ... , 11-n, and the control device 12 (or image server) via data/control lines 15 and synchronizes the overall system.

The timing control circuit 44 controls the overall display control device 42 under the control of the communication control circuit 43. The timing control circuit 44 outputs a light emission control instruction signal, a display control instruction signal, and an image process control signal and then, sends them respectively to the light emission control circuit 45, the display control circuit 46, and the frame selection/synthesis circuit 47.

The light emission control circuit 45 drives the light-emitting device 41 based on the instruction from the timing control circuit 44. The light-emitting device 41 thus flashes at a predetermined timing. The display control circuit 46 drives the display panel 40 based on the instruction from the timing control circuit 44. The display panel 40 displays images at a predetermined timing on the image signal. The frame selection/synthesis circuit 47 reads images out of the image storage section 48 based on the instruction from the timing control circuit 44 and performs various processes of the read images such as shifting, synthesis, and rotation thereof. If the electric train 4 travels slowly, namely, it is necessary that the image is displayed on one display panel based on the image signal of two frames when displaying the image, the frame selection/synthesis circuit 47 synthesizes the image to be displayed on the display panel 40 using image data of two adjacent frames to supply it to the display control circuit 46.

The image storage section 48 includes a memory and a hard disk. It temporarily stores the data of the still images sent from the control device 12 (or the image server). It is possible to rewrite the data of the still images stored on the image storage section 48 as necessary. The number of frames for the data of the still images to be stored on the image storage section 48 are different from each other based on a travelling speed of the electric train 4. If the electric train 4 travels slowly, the number of frames to be displayed on one LCD device is made larger, thereby increasing the number of frames to be stored on the image storage section 48.

Referring back to Fig. 3, the displaying devices 11 may display one still image over plural display panels by a control of the control device. In this embodiment, it is described where one still image is displayed over two display panels.

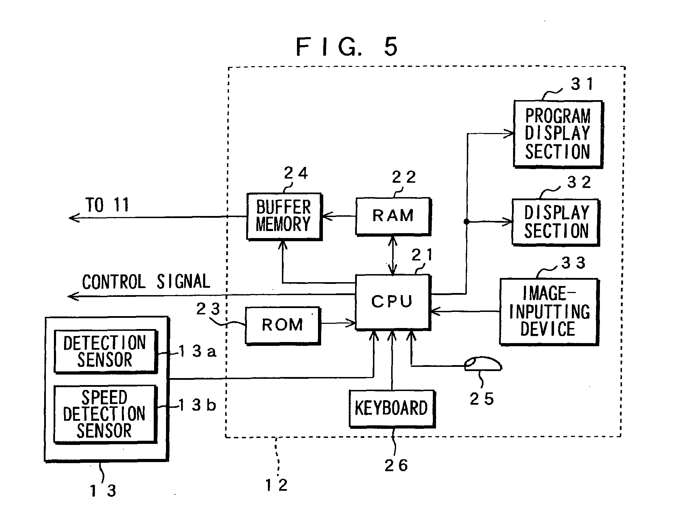

The control device 12 controls the displaying devices 11 so that the plural still images can be displayed at their set positions of each of the displaying devices 11 at their set timing based on a speed of the electric train 4 detected by the speed detector 13. The control device 12 typically has a personal computer (see Fig. 5).

The speed detector 13 has a detection sensor 13a for detecting an existence of the electric train 4 and a speed detection sensor 13b for detecting a travelling speed of the electric train 4. The detection sensor 13a turns on when the electric train 4 enters into a predetermined section, for example, a section in which the displaying devices 11 are set, and it turns off when the electric train 4 leaves from this section. The detection sensor 13a can be positioned at a tail end of the section in which the displaying devices 11 are set. Detection signal of the detection sensor 13a and a signal on a speed of the electric train 4 detected by the speed detection sensor 13b are input to the control device 12.

Fig. 5 illustrates a configuration of an embodiment of the control device according to the invention. As shown in Fig. 5, the control device 12 using a personal computer has a central processing unit (CPU) 21, a random access memory (RAM) 22 for storing data for the still images, a read-only memory (ROM) for storing control programs, a buffer memory 24, outside input apparatus, i. e., a mouse 25 in this case, and a keyboard for inputting control information.

The CPU 21 controls operations of the overall image-displaying apparatus 100 under the control programs stored in the ROM 23 with the RAM being used as working area. The CPU 21 also works to compute a display position of each of the still images based on the speed of the electric train 4 detected by the speed detection sensor 13b. The CPU 21 further works to select data for the still images corresponding to plural programs.

The RAM 22 stores data for the still images corresponding to plural programs that are different from each other in their contents. The control device 12 transfers the data for the still images to the image storage section 48 in the respective display control device 42 as necessary and the image storage section 48 then stores it.

The CPU 21 receives from the detection sensor 13a a detection signal indicating that the electric train 4 is close to a site in which the displaying devices 11 are set. In this embodiment, the detection sensor 13a for detecting that a forward end (operator's room) of the electric train 4 has been passed is installed at one of the displaying devices 11, which is nearest the forward end of the electric train 4, so that the detected signal indicating that the forward end of the electric train 4 has been passed can be supplied to the CPU 21.

When the CPU 21 receives this detected signal, it sends a display control signal to the displaying devices 11. When a period of time when the detection sensor 13a turns on has elapsed, namely, the electric train 4 has passed, the CPU 21 sends a display stop signal to the displaying devices 11 to stop their display relative to the still images.

The CPU 21 receives a signal relative to the speed of the electric train 4 detected by the speed detection sensor 13b. The CPU 21 computes display position of each of the still images based on the speed of the electric train 4 detected by the speed detection sensor 13b, and sends control signal of the display position to the displaying devices 11. The CPU 21 controls the displaying devices 11 so that each of the still images can be displayed at their appropriate positions.

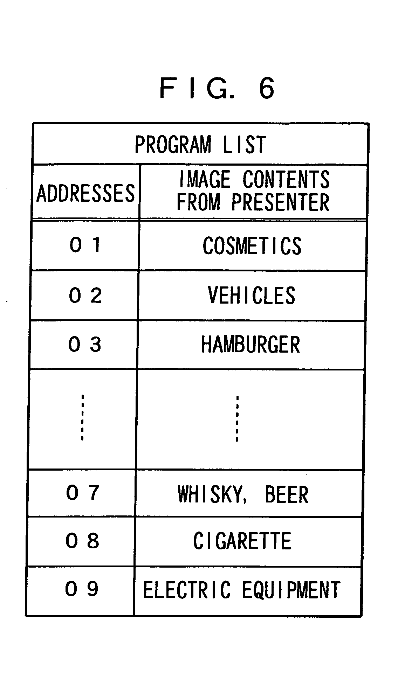

Fig. 6 illustrates an example of a list of programs. The programs include various kinds of still images such as television commercial ones, a preview of movie, and images for advertisement such as promotion video images. Fig. 6 illustrates plural programs stored in the RAM 22 conceptually. When plural programs are stored in the RAM 22, the still images using as images for advertisement on cosmetics, for example, are stored in program address 01, as shown in Fig. 6. Similarly, the still images using as images for advertisement on vehicles are stored in program address 02. Further, in the example shown in Fig. 6, the still images using as images for advertisement on hamburger, whisky, cigarette, electric equipment are stored in program addresses 03, 07, 08 and 09, respectively.

It can be set how to store them optionally. The following will be described on a case where they are stored using image-inputting device 33. The still images using as images for advertisement on cosmetics, which has a predetermined frames, are first captured from the image-inputting device 33 and they are stored in RAM 22 with them being addressed to address 01. Next, the still images using as images for advertisement on vehicles, which has a predetermined frames, are captured from the image-inputting device 33 and they are stored in RAM 22 with them being addressed to address 02. According to similar procedure, the remaining still images, which has a predetermined frames, are captured from the image-inputting device 33 and they are stored in RAM 22.

Hereinafter, a list of the stored programs as shown in Fig.6 is referred to as "program list". Program display section 31 or display section 32 can display the program list as a monitor in order to confirm it as necessary.

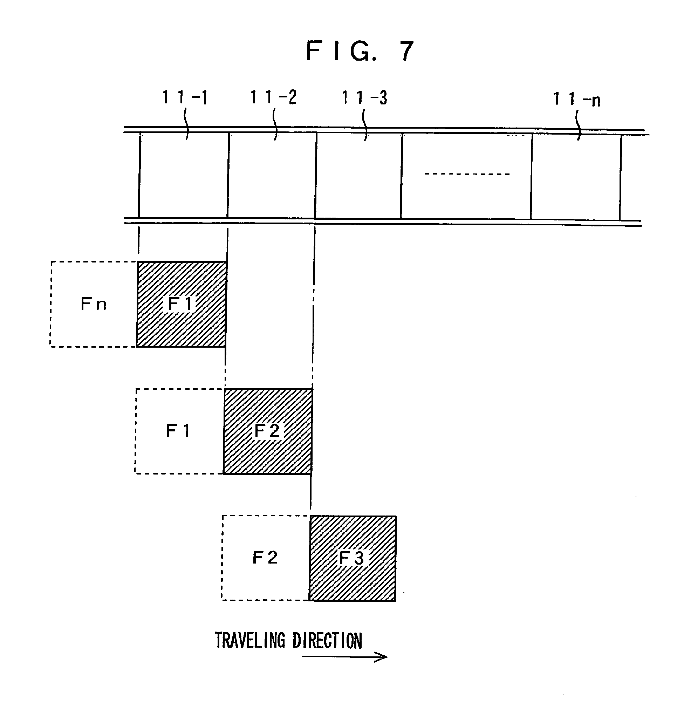

Fig. 7 illustrates a case where still images of one frame are displayed on one LCD device. For example, if a breadth of LCD device of the displaying devices 11 is 47 cm, the speed of the electric train 4 when the still image of one frame is displayed on one LCD device is 50 km/h in order to display thirty still images per second. This speed is set as a reference speed for explanation.

As shown in Fig. 7, if the electric train 4 travels at the reference speed, the still image of frame F1 is displayed on the LCD device 11-1; the still image of frame F2 is displayed on the LCD device 11-2; the still image of frame F3 is displayed on the LCD device 11-3; and the still image of frame Fn is displayed on the LCD device 11-n. Thus, thirty still images are displayed using thirty LCD devices 11-1, 11-2, ..., 11-n.

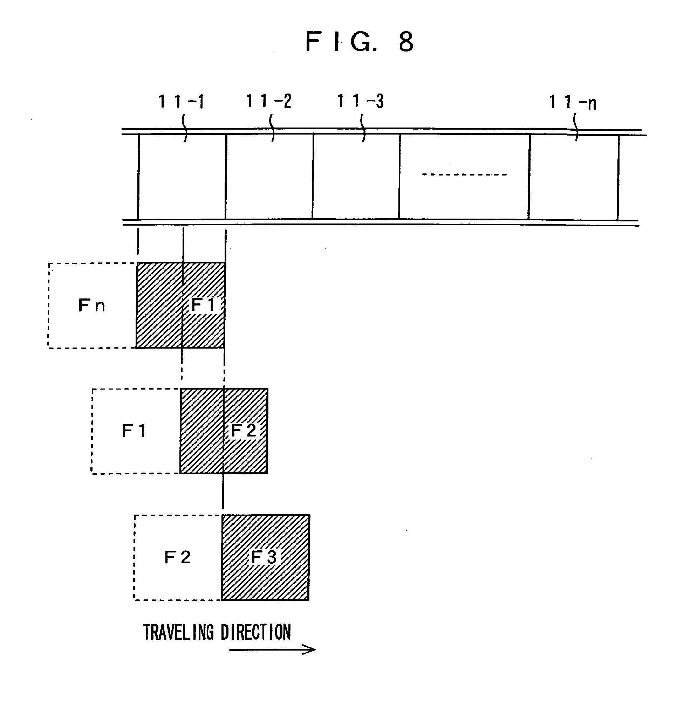

Fig. 8 illustrates a case where the still images are displayed if the electric train travels at a half speed of the reference speed. If the electric train 4 travels at a half, 25 km/h, of the reference speed, the still image of frame F1 is displayed on the LCD device 11-1. The still image of frame F2 is displayed on a half of the LCD device 11-1 and a half of the LCD device 11-2 so that it can be displayed with a position of frame F2 being shifted by a half frame from the frame F1. Similarly, the still image of frame F3 is displayed with a position of frame F3 being shifted by a half frame from the frame F2. Thus, thirty still images are displayed using sixteen LCD devices 11-1, 11-2, ^{...}, 11-16.

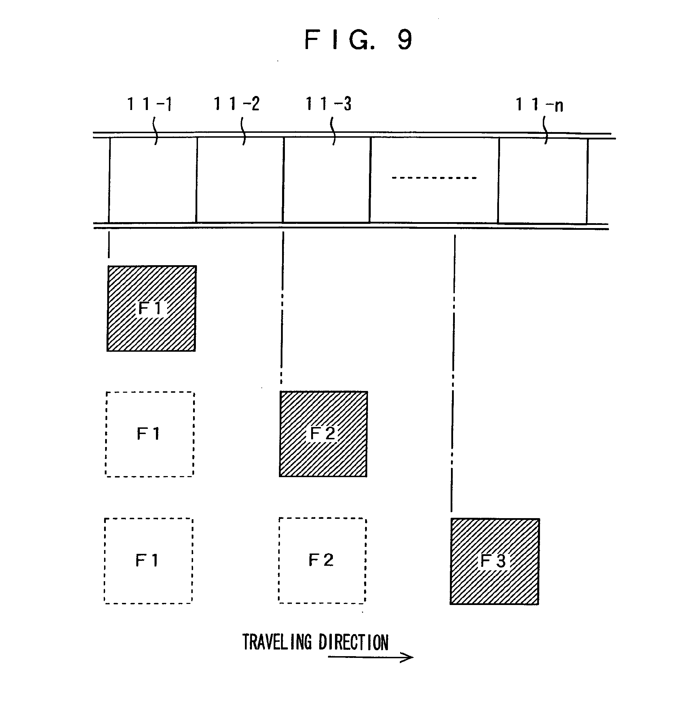

Fig. 9 is a diagram for illustrating a case where the still images are displayed if the electric train travels at a speed that is doubles the reference speed. If the electric train 4 travels at a speed, 100 km/h, that is double the reference speed, the still image of frame F1 is displayed on the LCD device 11-1. The still image of frame F2 is displayed on the LCD device 11-3. Similarly, the still image of frame F3 is displayed on the LCD device 11-5.

In this case, it should be noted that plural still images can be displayed at a predetermined space as the image-displaying apparatus 1 shown in Fig.1 in which the past displaying devices are aligned at a predetermined space.

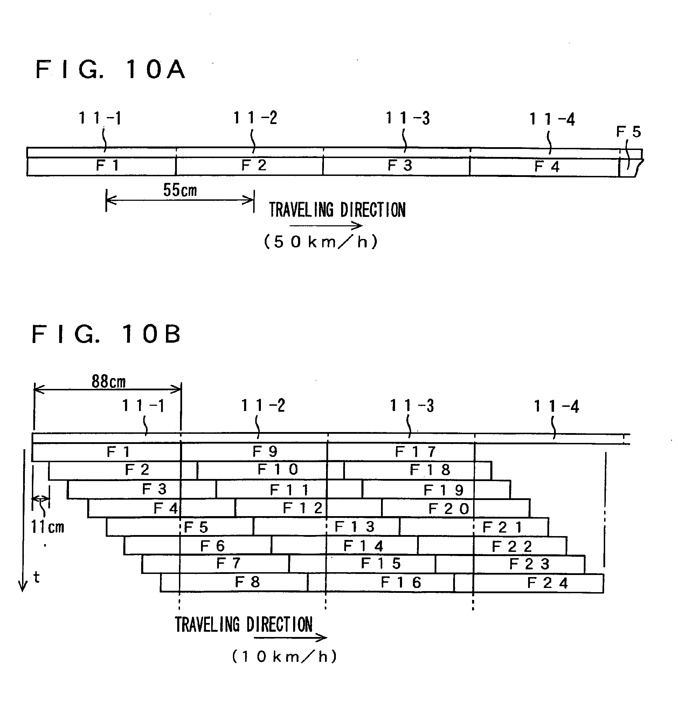

Fig. 10 illustrates a relationship between a speed and a display position when the still images are displayed at 24 frames per second. In Fig. 10, shown from a viewpoint above the image displaying devices 11, a display order and a display position of the still image of each frame are illustrated. Fig. 10A illustrates a display position of the still image of each frame when the electric train 4 travels at 50 km/h. Herein, it is noted that a breadth of display screen of each of the LCD devices 11-1, 11-2, ..., 11-n is 55 cm. Fig. 10B illustrates a display position of the still image of each frame when the electric train 4 travels at 10 km/h.

As shown in Fig. 10A, if the electric train 4 travels at 50 km/h, the still images of frames F1, F2, ..., Fn are respectively displayed on the display screens of the LCD devices 11-1, 11-2, 11-n. In this case, display positions of the still images of each frame are shifted to each other by 55 cm by computing it on the basis of the speed of the electric train 4. The still images of each frame are displayed without any space and any overlap thereof. Thus, the still images of twenty-four frames are displayed using twenty-four LCD devices 11-1, 11-2, ..., 11-24.

As shown in Fig. 10B, if the electric train 4 travels at 10 km/h, display positions of the still images of each frame are shifted to each other by 11 cm by computing it on the basis of the speed of the electric train 4, so that the still images of each frame are overlapped. Herein, for explanation, the display panel 40 has no standard breadth, for example, has a breadth of 88 cm. If the LCD devices 11-1, 11-2, ..., 11-n have a breadth of display screen of 88 cm and a width of the frame is also 88 cm, the still image of frame F1 is displayed on the LCD devices 11-1, and then, the still image of frame F2 is displayed with it being shifted from the still image of frame F1 by 11 cm with respect to the traveling direction of the electric train 4. In this moment, the still image of frame F2 is displayed on respective parts of the display screen of the LCD devices 11-1, 11-2.

After displaying the still image of frame F2, the still image of frame F3 is displayed with it being shifted from the still image of frame F2 by 11 cm. In this moment, the still image of frame F3 is displayed on respective parts of the display screen of the LCD devices 11-1, 11-2. Thus, when displaying the still images of frames F2 to F8, the LCD devices are simultaneously driven to display them. After displaying the still image of frame F8 on the display screen of the LCD devices 11-1, 11-2, the still image of frame F9 is displayed on the display screen of the LCD device 11-2, which is positioned at 88 cm from an end of the LCD device 11-1. When displaying the still image of frame F9, only the LCD device 11-2 is driven to display it. Further, when displaying the still images of frames F10 to F16, the LCD devices 11-1, 11-2 are simultaneously driven to display them. When displaying the still image of frame F17, only the LCD device 11-3 is driven to display it. When displaying the still images of frames F18 to F24, the LCD devices 11-3, 11-4 are simultaneously driven to display them. Thus, left adjacent LCD device displays the still image before eight frames. The still images of twenty-four frames are displayed using four LCD devices 11-1, 11-2, 11-3, and 11-4.

Thus, displaying the still images with them being shifted allows them to be displayed at the same frame rate if the electric train 4 travels slowly.

It should be noted that if the electric train 4 travels at 100 km/h, display positions of the still images of each frame are shifted to each other by 110 cm by computing. When a breadth of the frame is smaller than 110 cm, the still images of each frame are displayed so that they are apart from each other.

Width of displayed image (width of image frame) can be set optionally. As described above, a display position of the image relates to width of the image and a traveling speed of the mobile object (a person who is traveling by the mobile object). Herein, a breadth of the display panel is set to Wp, width of the displayed image is set to Wv, a traveling speed of the mobile object is set to Vt, a light emission interval of the backlight is set to Tf, and a traveled distance of the mobile object (a person who is traveling by the mobile object) is set to Sts.

The traveled distance Sts of the mobile object (a person who is traveling by the mobile object) is obtained according to an expression, Sts=Vt*Tf. If the traveled distance Sts is larger than the width of the displayed image, Sts>Wv, the images are displayed at a predetermined timing so that they are shifted at a predetermined space to be apart from each other. If the traveled distance Sts is equal to the width of the displayed image, Sts=Wv, the images are displayed so that they are adjacent. If the traveled distance Sts is smaller than the width of the displayed image, Sts<Wv, the images are displayed with them being adjacent and shifted.

Divided number Nd of the image to be displayed is obtained according to an expression, Nd=Wp*Sts.

If the divided number is increased, this can correspond to a case where the electric train travels fast. If, however, the electric train travels fast, an amount data to be stored in the image storage section 48 is also increased. This causes a capacity of the image storage section 48 to be also increased.

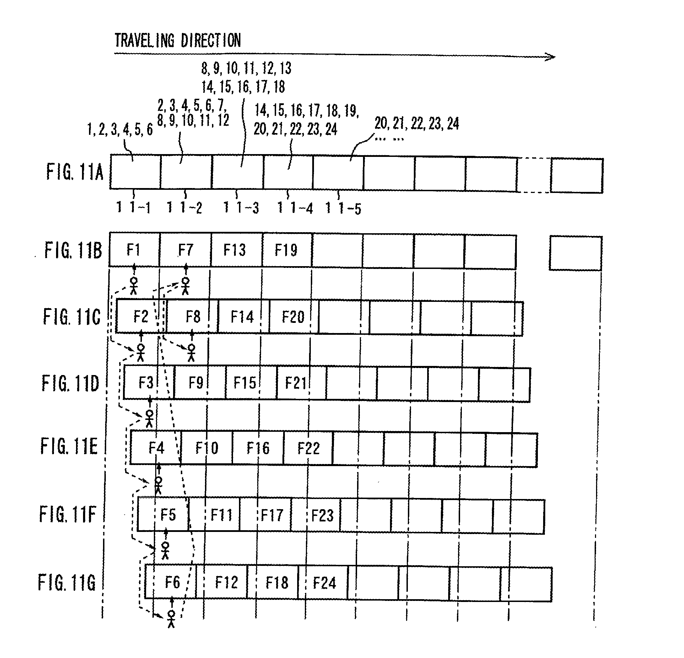

Fig. 11 illustrates an example of display sequence. In this case, the breadth of the display panel Wp is equal to the width of the displayed image Wv. The divided number Nd of the image to be displayed is obtained according to an expression, Nd=6*Sts.

Fig. 11A illustrates a physical alignment of the display panels. The shown numbers are numbers of frame to be displayed. Fig. 11B illustrates display contents at time 0. The still images of frames F1, F7, F13, and F19 are respectively displayed on their display panels. A person who is traveling by the mobile object views the image of frame F1. Fig. 11C illustrates display contents at time after time Tf has been passed. In this moment, the still images of frames F2, F8, F14, and F20 are respectively displayed on their display panels. A person who is traveling by the mobile object views the image of frame F2. Fig. 11D illustrates display contents at time after time 2Tf has been passed. In this moment, the still images of frames F3, F9, F15, and F21 are respectively displayed on their display panels. A person who is traveling by the mobile object views the image of frame F3. Fig. 11E illustrates display contents at time after time 3Tf has been passed. In this moment, the still images of frames F4, F10, F16, and F22 are respectively displayed on their display panels. A person who is traveling by the mobile object views the image of frame F4. Fig. 11F illustrates display contents at time after time 4Tf has been passed. In this moment, the still images of frames F5, F11, F17, and F23 are respectively displayed on their display panels. A person who is traveling by the mobile object views the image of frame F5. Fig. 11G illustrates display contents at time after time 5Tf has been passed. In this moment, the still images of frames F6, F12, F18, and F24 are respectively displayed on their display panels. A person who is traveling by the mobile object views the image of frame F6. Next display time is similar to a case of Fig. 11B. A person who is traveling by the mobile object views the image of frame F7. Thus, the above contents are displayed repeatedly. The still images of twenty-four frames are displayed using five LCD devices 11-1, 11-2, 11-3, 11-4 and 11-5.

As shown in Fig. 11, eleven frames, 2 through 12 are shown as the frame to be displayed on the LCD device 11-2. Image data of two frames is synthesized to generate a synthesized signal except for displaying the image of frame F7 so that the images can be displayed using the signal. For example, at time Tf, image data of frames F2 and F8 is synthesized to generate a synthesized signal so that the images can be displayed using the signal. Thus, the image storage section 48 of the LCD device 11-2 temporarily stores image data of eleven frames, 2 through 12.

Eleven frames, 8 through 18 are shown as the frame to be displayed on the LCD device 11-3. Image data of two frames is synthesized to generate a synthesized signal except for displaying the image of frame F13 so that the images can be displayed using the signal. Thus, the image storage section 48 of the LCD device 11-3 temporarily stores image data of eleven frames, 8 through 18. Other LCD devices are also exactly alike. It is noted that the image storage section 48 of the LCD device 11-1 can store image data of six frames, 1 through 6, temporarily.

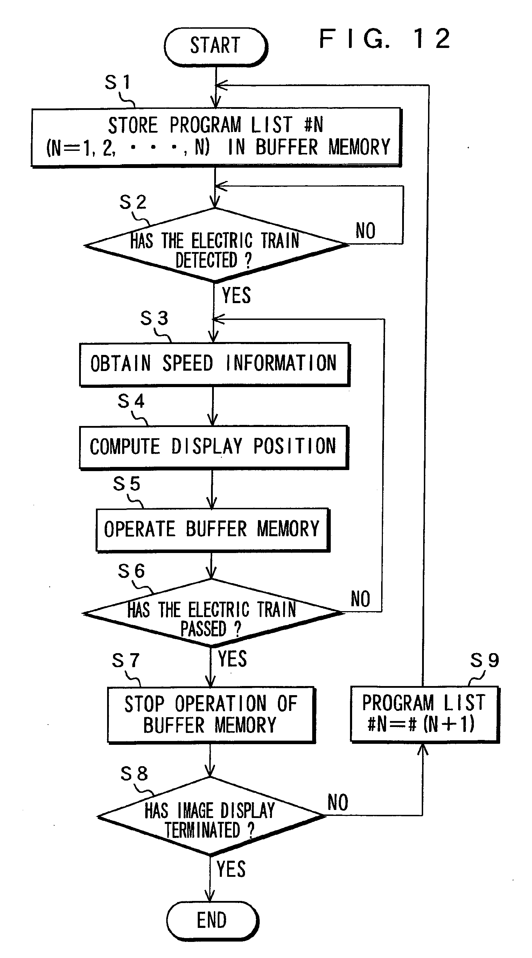

The following will be described on operations of the image-displaying apparatus 100 with reference to the drawings. Fig. 12 illustrates a flowchart indicating processing operations when the still images are displayed in the image-displaying apparatus 100.

As shown in Fig. 12, at Step S1 when the still images are displayed in the image-displaying apparatus 100, the program list #N (N=1, 2, ..., N) is first stored in the buffer memory 24. For example, image contents of the program list 01 are stored therein.

At Step S2, it is determined whether existence of the electric train 4 is detected by the detection sensor 13a. If the existence of the electric train 4 is detected, the process goes to Step S3 where speed information of the electric train 4 is obtained. Herein, the speed detection sensor 13b detects traveling speed of the electric train 4 to obtain the detected speed thereof. At Step S4, a display position of the image to be displayed is computed. Herein, the CPU 21 computes the display position of each of the images based on the detected traveling speed of the electric train 4.

At Step S5, the buffer memory 24 operates so as to display the image signals at their appropriate positions of the display screen of each of the LCD devices 11-1, 11-2, ..., 11-n. At step S6, it is determined whether the electric train has been passed. If passed, the process goes to Step S7 where the CPU 21 stops operation of the buffer memory 24. If not passed at Step S6, the process goes back to Step S3 where the above operations are repeated.

Next, if it has been determined that image display mode is continued at Step S8, the process goes to step S9 where the program list is incremented by one and then, the process goes back to step S1 where it is waiting for image display operation.

If it has been determined that image display mode is terminated at Step S8, this image display processing program stops. Thus, every time when the electric train has been passed during the image display mode, the program list is updated. This allows display image programs to be rewritten automatically every time when the electric train has been passed. According to any programming ways of sent programs, sending time of each of the programs to be provided with a person who is traveling by the mobile object can be made identical. In this case, this can be done within a range of traveling speed of the electric train 100 from 0 to 100 km/h.

Thus, in the above embodiments, the image displaying apparatus 100 has the displaying devices 11, the control device 12, and the speed detector 13. The displaying devices 11 are constituted of plural LCD devices 11-1, 11-2, ..., 11-n with them being aligned without any space therebetween along a path of the electric train 4. The LCD devices 11-1, 11-2, ..., 11-n are positioned at sites where the person who is travelling by the electric train 4 is allowed to view the still images from the electric train 4. Plural still images that become motion images when displaying the still images in turn are previously prepared, and then, in this image displaying apparatus 100, such the still images are stored. When displaying the still images, the control device 12 controls so that the plural still images are respectively displayed at their set timing on their set positions of the displaying device 11 based on the traveling speed of the electric train 4 detected by the speed detector 13.

If relative speed of the electric train 4 to the still images to be displayed, this allows the natural and smooth motion images to be displayed when the electric train 4 travels slowly. In other words, if slow traveling, it is possible to reproduce the shot images naturally, thereby allowing them to be commercially utilized.

Determining display position of each of the still images based on the traveling speed of the electric train 4 enables any correspondence to a wide range between slow and fast traveling speeds of the electric train 4. If traveling speed of the electric train 4 alters in a section of the image-displaying apparatus 100, it is possible too provide stable image display.

Since the plural LCD devices are aligned without any space therebetween along the path of the electric train 4, it is possible to freely adapt a breadth of the image to be displayed, thereby preventing any restriction of the breadth of the image to enable correspondence to the image having any sizes such as the ones based on standard image signal and wide image signal, without.

Although it has been described that the image date is supplied from the control device 12 of the image-displaying apparatus 100, the invention is not limited to this. The image data can be supplied from any outside distributor via a network.

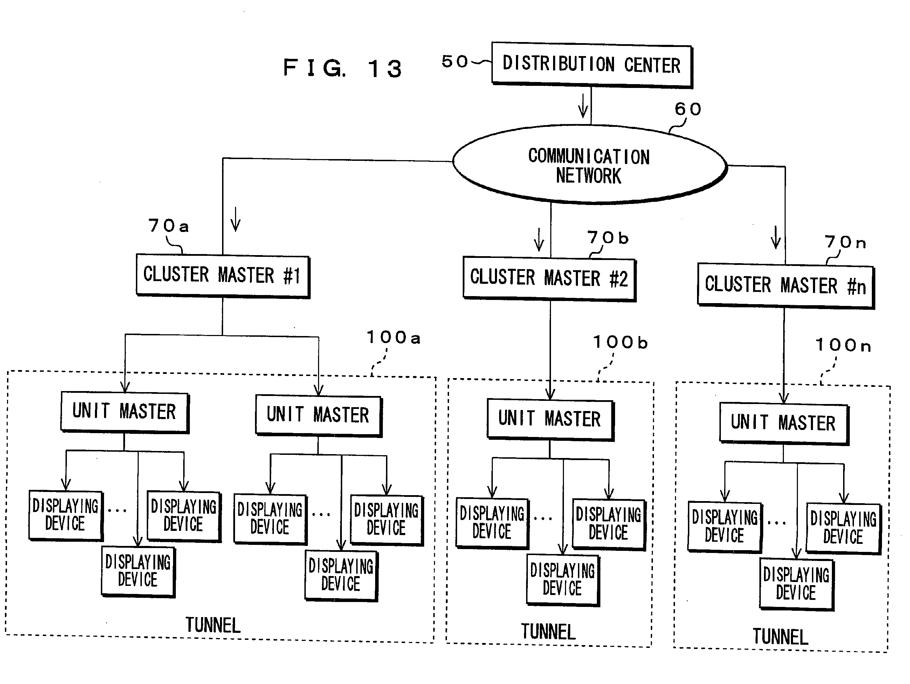

Fig. 13 illustrates a configuration of such the image data distribution system via a network. As shown in Fig. 13, image data is first supplied from a distribution center (outside distributor) 50 to cluster masters 70a, 70b, ..., 70n via communication network 60. The image data is then supplied from the cluster masters 70a, 70b, ..., 70n to the image-displaying apparatus 100a, 100b, ..., 100n. The image-displaying apparatus 100a has two units to which the image data is supplied from the cluster master 70a. This allows contents of the image-displaying apparatus 100a, 100b, ..., 100n that the positioned at respective sites to be controlled by the distribution center 50.

Although it has been described in the above embodiments that the mobile object is the electric train 4, the invention is not limited to this. The mobile object includes an elevator, an escalator, a horizontal escalator, and a ride in amusement ground. When the mobile object is an escalator or a horizontal escalator, they run at the same speed so that a speed detection is unnecessary, thereby avoiding a speed detection sensor. When displaying the images, it is possible to control the display on the basis of previously set speed. The processing operation when displaying the images is the same as that based on the flowchart shown in Fig. 12. In this case, that is good enough for only a first display position to be computed.

Although it has been described in the above embodiments that the displaying devices are the LCD devices 11-1, 11-2, ..., 11-n, the invention is not limited to this. Other displaying devices such as LED displaying device, plasma displaying device, and electroluminescent displaying device can be used in this invention. These displaying devices emit light by themselves so that light-emitting device is unnecessary. Further, displaying devices like projector can be also used in this invention. If so, screens of the projectors are aligned without any space therebetween along the path of mobile object. One projector can display plural still images (for example, two or three still images) at their appropriate timing on their set positions. This allows image-displaying system to be implemented by less displaying device, thereby decreasing the costs therefor.

Although it has been described in the above embodiments that the control device is CPU 21, the invention is not limited to this. Any hardware constituting of control circuit can be used in this invention. This allows fast processing to be realized.

Although it has been described in the above embodiments that the speed detector 13 is set on one side of the LCD devices 11, the invention is not limited to this. The speed detectors 13 can be set on opposite sides of the LCD devices 11. This can correspond to a case where the electric trains 4 come from both directions to the set LCD devices 11.

Thus, an image-displaying apparatus and an image-displaying of the above embodiments of the invention can be utilized as advertising materials in a subway, amusement grounds or the like because they allow any person who is travelling by the mobile object to view motion images due to the still images through the mobile object.

Alternatively, referring to the drawings, the invention will be described in detail referring to further preferred embodiments of an image-displaying apparatus and the like according to the invention with reference to the drawings. In these embodiments, same members as those in the above embodiments are represented using like reference numbers and/or characters, the description of which will be omitted.

The following will be described on an embodiment of the image-displaying apparatus by which the image-displaying devices 11 are secured in a wall surface of a tunnel to allow the person who is travelling by the electric train 4 that is passing to view the motion image from the electric train 4.

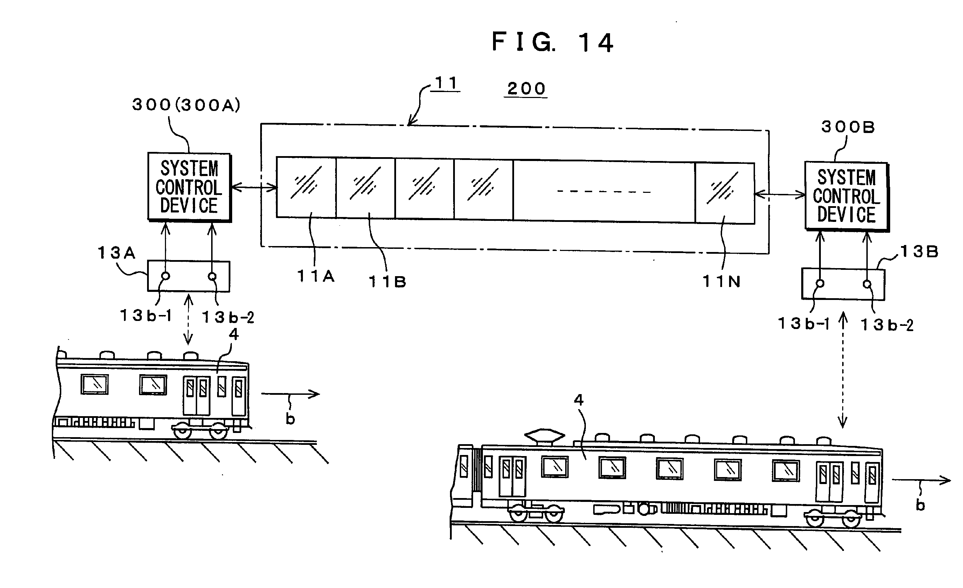

Fig. 14 conceptually illustrates an embodiment of such the image-displaying apparatus 200 according to the invention. The image-displaying apparatus 200 includes plural displaying devices 11 (11A, 11B, ..., 11N) each for displaying an image, and system control devices 300 (300A, 300B) each for distributing the still images or the like to these displaying devices 11. The system control devices 300 can be set on both of a start side and a terminating end of the displaying devices 11.

The plural displaying devices 11 (11A, 11B, ..., 11N) are aligned on a wall surface of the tunnel without any space between the adjacent displaying devices, which will be described later. Number of set displaying devices relates to a period of time when the motion image is displaying and preferably stands in a range of 90 through 120 devices usually.

A speed detector 13A for detecting a passing (access) speed of the electric train 4 supplies its sensor output to the system control device 300A of the starting side). The speed detector 13A has a pair of speed detection sensors 13b-1, 13b-2 for detecting the passing speed of the electric train 4 with respect to traveling directions thereof. The speed detector 13A is secured in the wall surface of the tunnel and used.

A speed detector 13B relative to the system control device 300B of the terminating side also detects a passing (leaving) speed of the electric train 4. The speed detector 13B has a pair of speed detection sensors 13b-1, 13b-2.

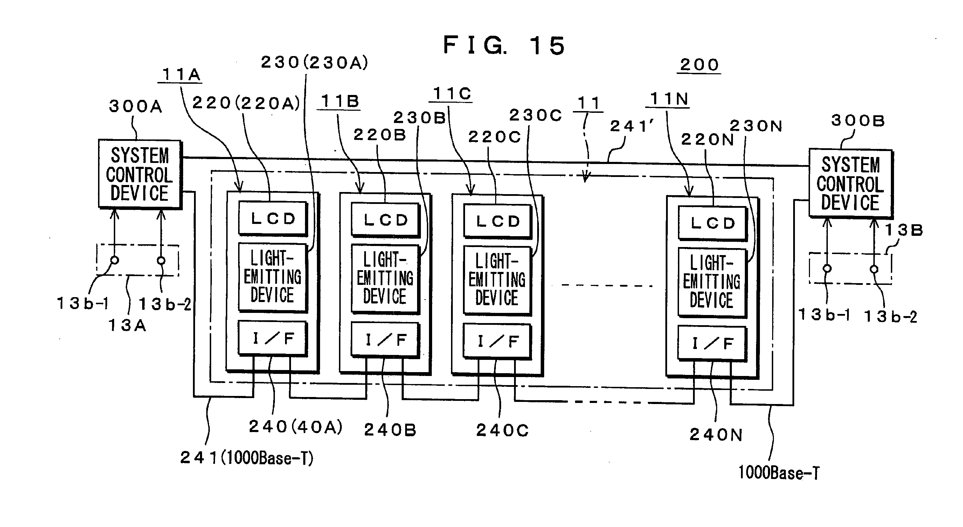

The respective displaying devices 11 constituting the image-displaying apparatus 200 have the same configuration. As shown in Fig. 15, the displaying device 11A includes image-displaying part 220A, light-emitting device 230A for making the image-displaying part 220A emit light, and a pass-through typed interface portion 240A. Other displaying device 11B, ..., 11N have the same configuration.

The image-displaying part 220 includes flat display monitor such as LCD, plasma display and organic electroluminescent (EL) panel. In this embodiment, the LCD is illustrated.

The LCD is constituted of a reflective LCD and a translucent LCD, both cases of which are necessary for the light-emitting device 230 as flash luminous source. As the light-emitting device 230 controlled by a light emission signal (pulse signal) from a light emission control portion, strobe light, white light-emitting diode (LED) and the like are used. When using the translucent LCD 220, flashlight (strobe light) is used as backlight. When using the reflective LCD 220, strobe light is merely used as light-emitting device.

The system control device 300A and the first displaying device 11A, adjacent plural displaying devices 11A through 11N, and the last displaying device 11N and the system control device 300B are connected to each other through one daisy-chained communication path 241. As the daisy-chained communication path 241, a communication cable such as 1000 Base-T, 1000 Base-SX, and 1000 Base-LX, which are easily available and low priced but can communicate fast, is used.

Each of the pass-through typed interface portions 240 provided with each of the displaying devices 11 has two ports and the adjacent ports are daisy-chained. It is determined that received information is destined for its own displaying device, the pass-through typed interface portion 240 processes the received information by itself. It is determined that received information is not destined for its own displaying device, the pass-through typed interface portion 240 sends the information received at a port to the other port as it is (cut-through function). Thus, when received information is unrelated to its own displaying device, the pass-through typed interface portion 240 serves merely as a delay element. Thereby, such the interface is referred to as "pass-through typed interface portion". When it serves as a delay element, the delay time thereby is fixed, which will be described later.

The system control device 300 performs a series of controls to select the still image to be distributed, to distribute the selected still image, to detect a speed of passing electric train 4, and to distribute light emission information for controlling light-emitting timing of the displaying devices 11 so that each of the displaying devices 11 can emit light at an appropriate light emission interval relative to a passing speed of the electric train 4.

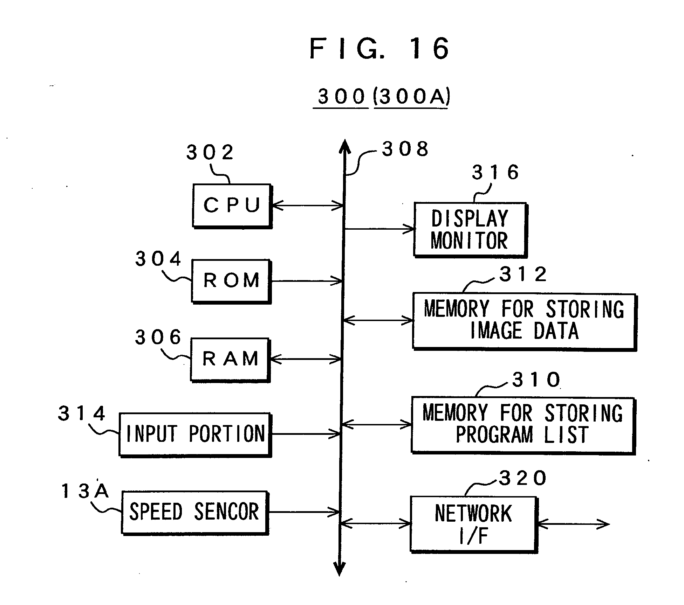

Fig. 16 conceptually illustrates an embodiment of such the system control device 300 according to the invention. In the system control device 300, a control portion (CPU) 302 for controlling the overall system is connected with a memory 304 (ROM and the like) for storing processing program for carrying out various controls such as distribution control and a memory for working (RAM and the like) 306 through a bus 308.

A memory 310 for storing plural program lists to distribute images, a memory 312 for storing the still images (image data) corresponding to these program lists are also connected to each other through the bus 308. An input portion 314 such as a keyboard and a mouse, a display monitor 316 are connected to the bus 308. A network interface 320 and the above-mentioned speed detector 13A are also connected to the bus 308. The displaying device 11A is connected to the communication cable 241 through the network interface 320.

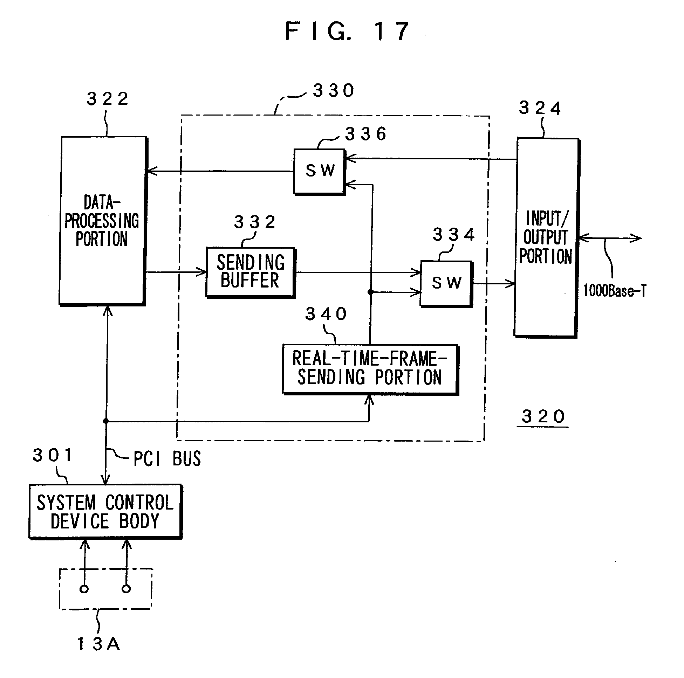

Fig. 17 illustrates a relationship between a system control device body 301, which has a configuration same as that of the system control device 300 except for the network interface 320, and the network interface 320. The system control device body 301 and the network interface 320 are connected to each other through a peripheral component interconnect (PCI) bus.

The network interface 320 has a network interface card (NIC) function and a function to send frame information in real time. Processing of generation, send-out, and input of the frame information is carried out by a data-processing (MAC processing) portion 322 and an input/output portion 324 as the ordinary case in non-real time. A real-time-processing portion 330 is inserted between the data-processing portion 322 and the input/output portion 324. The input/output portion 324 is a process chip of Ethernet physical layer where data exchange process is performed. The input/output portion 324 is connected to the communication cable 241 using RJ45 or an optical transceiver.

Processing of generation and send-out of the send frame (hereinafter, referred to as control frame) in response to a command to be sent is carried out based on command information, sending timing information and the like generated by software in the system control device body 301. First, in the data-processing portion 322, processing of generation and send-out of non-real time control frame is carried out. Second, in the real-time-processing portion 330, processing of generation and send-out of real time control frame is carried out.

As the non-real time control frame, conceivable are a control frame into which a command for initialization, which will be described later, is inserted; a control frame into which a command for collecting delay time in the plural displaying devices 11 is inserted; a control frame into which a collection command for collecting various kinds of status information in the displaying devices 11 is inserted; a control frame into which a command for distributing original MAC address to each of the displaying devices 11 is inserted; and the like. These control frames need not any real time requirement on their sending processing and receiving processing.

On the other hands, a control frame into which a command for distributing light emission information is inserted needs real time requirement. When distributing a light-emission-timing signal to the plural displaying devices 11A through 11N, it is necessary to perform a control such that the signals can be sent at the same time in unison. This needs real time and isochrony requirements.

For this reason, in the real-time-processing portion 330, a real-time-frame-sending portion 340 for generating and sending real time frame (control frame) is provided as shown in Fig. 17. Output switch 334 receives the non-real time control frame through a sending buffer 332 and the real time control frame to select one of these control frames.

Receive frame received through the input/output portion 324 is supplied to input switch 336 where one of the receive frame and the real time control frame, in this embodiment, is selected. The selected receive frame or real time control frame is supplied to the data-processing portion 322. Supply of the real time control frame to this input switch 336 allows the control frames to be monitored at a monitor 316 in the system control device body 301 at the same time of sending them.

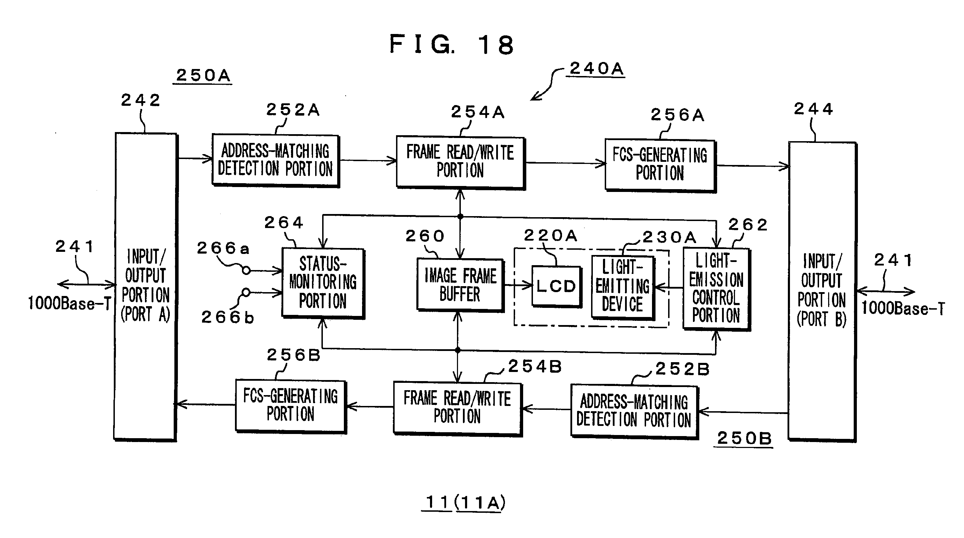

Fig. 18 illustrates a configuration of an embodiment of the displaying device 11 (any one of the displaying devices 11A through 11N) according to the invention. The displaying device 11 includes the image-displaying part 220, the light-emitting device 230, and the pass-through typed interface portion 240. The light-emitting device 230 receives light emission signal from a light emission control portion 262.

Fig. 18 illustrates conception of the pass-through typed interface portion 240. The pass-through typed interface portion 240 has at least two ports. Fig. 18 shows the pass-through typed interface portion 240 having two ports. This pass-through typed interface portion 240 having two ports serves as a delay element for sending the information received at a port out of the other port as it is at cut-through operation time when it is determined that received information is not destined for its own displaying device. In other words, the pass-through typed interface portion 240 serves as a fixed delay element at cut-through operation time.

In the pass-through typed interface portion 240 having two ports, if one port (input/output portion) 242 operates as an input port, the other port (input/output portion) 244 operates as an output port and if the other port 244 operates as an input port, the one port 242 operates as an output port. This enables an interactive (full duplex) communication to be realized so that the pass-through typed interface portion 240 has two processing systems 250A and 250B, which have the same configuration.

If one port 242 operates as an input port, control frame information received at this port 242 is supplied to an address-matching detection portion 252A constituting processing system 250A to detect matching of address (header information) that is inserted into the control frame. Address for its own display device is given at the initialization of the system, which will be described later.

If received address matches the address for its own display device, control frame information is transferred to next frame read/write portion 254A where the information is analyzed. Typical processing therefor will be described.

First, if analyzed result indicates write processing, necessary frame information is written to image frame buffer 260.

Second, if analyzed result indicates light emission delay information, the delay information is saved in the light emission control portion 262. Although the pass-through typed interface portion 240 operates merely as a delay element, it can know delay time (waiting time) of the received displaying device 11i (i indicates an arbitrary number selected one from 1 to N) that is necessary for flashing the displaying devices 11 at the same time in unison when it is found how-manieth device the received displaying device 11i is if it is calculated from the first displaying device 11A. The system control device 300A computes this delay time of the received displaying device 11i and distributes the delay time information as the computed result. The light emission control portion 262 then saves this delay time information distributed for its own displaying device.

Third, if analyzed result indicates read processing from the frame buffer 260, necessary information is read out of the frame buffer 260 and the read information is added into an area corresponding to the control frame.

An error check coding portion (frame check sequence (FCS)-generating portion) 256A computes an error check code, for example, cyclic redundancy check (CRC) code so that the computed one is added to the control frame.

Fourth, if the system control device 300A collects status information of the displaying device 11A, information saved on status-monitoring portion 264 is inserted into the control frame and sent. In this embodiment, temperature information from internal temperature sensor (not shown) of the displaying device 11A is supplied thereto via input terminal 266a. Further, in this embodiment, display information on whether flashing is performed is supplied thereto via input terminal 266b.

Thus, in this embodiment, the temperature information and the display information are supplied to the system control device 300A via the system control device 300B. The sending and/or receiving processing thereof is performed using the communication cable 241' that is directly connected between the system control devices 300A and 300B.

In the above processing, it is not found an address for its own displaying device in the control frame, both of the frame read/write portion 254A and the FCS-generating portion 256A alter to cut-though operation so that the received information is sent out of the output port (input/output portion) 244 without adding any processing thereto. Thus, the processing system 250A serves merely as a delay element. The delay time thereof is different based on a configuration of the processing system 250A and clock frequency thereof. For example, clock frequency is 250 MHz and the processing system has a pipeline structure of 10 stages, the delay time becomes about 400 ns. The frame buffer 260 saves this delay time information.

In the processing system 250B, the input/output portion 244 operates as input port and the input/output portion 242 operates as output port. The processing system 250B has the same configuration as that of the processing system 250A and performs the same processing as that of the processing system 250A. Therefore, the corresponding numbers and characters (252B through 256B) are applied to the corresponding portions, operation description and the like of which will be omitted.

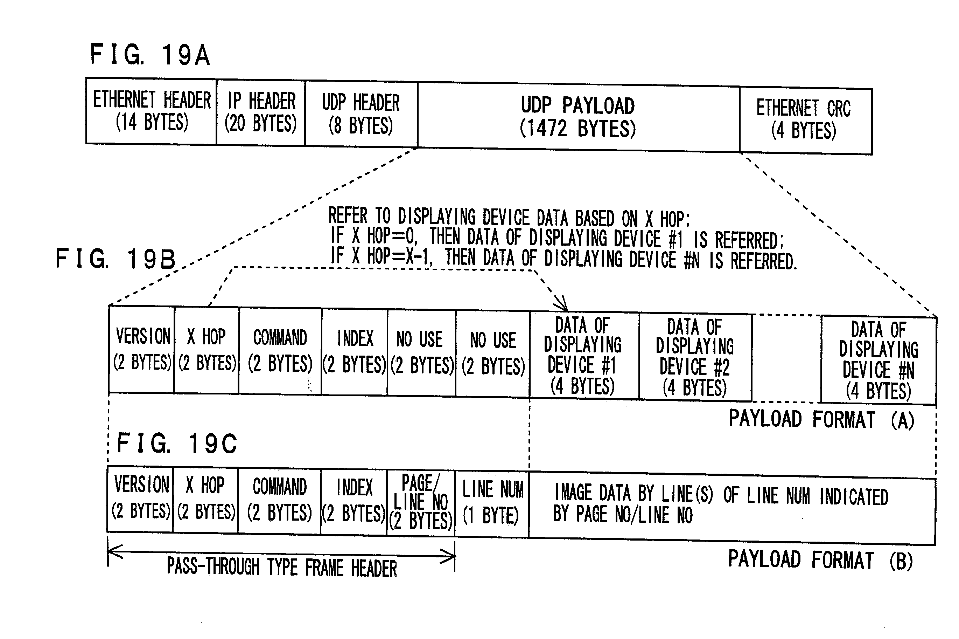

In order to implement the above operations, frame structure for the control frame as shown in Figs. 19A and 19B is adopted in an embodiment of this invention. Such the control frame includes a header and a payload, and a trailer.

To a top of the control frame, the header constituted of plural headers is added. The header includes Ethernet header, IP header, and UDP header.

First header is Ethernet header. The Ethernet header is provided for distributing necessary information from the system control device 300A to the system control device 300B through the plural displaying devices 11A through 11N. Similarly, the Ethernet header is also provided for distributing necessary information from the system control device 300B to the system control device 300A.

Therefore, if the data is sent for the system control device 300B, MAC addresses of the system control device 300A as the transmitting end and the system control device 300B as the receiving end are inserted into the Ethernet header. This data structure is used in a case where the electric train 4 travels along an arrow "b" (for example, up-line direction) shown in Fig.14. The Ethernet header has fourteen bytes.

If the data is sent for the system control device 300A, MAC addresses of the system control device 300B as the transmitting end and the system control device 300A as the receiving end are inserted into the Ethernet header. This data structure is used in a case where the electric train 4 travels along an arrow "a" (down-line direction) shown in Fig. 1.

IP header of twenty bytes for identifying hardware, followed by the Ethernet header, is added. The IP header includes IP addresses of the system control devices 300A and 300B. In the IP header, according to whether a sending direction of data is the above "a" direction or "b" direction, the IP addresses of the transmitting end and the receiving end are changed to each other.

If a network structure is closed as shown in Fig. 15, IP address is not always necessary. This is because, if hardware having no IP address, the hardware can be identified using only its MAC address. In frame format shown in Fig. 19A, the header in which IP address can be added is provided, taking into consideration a connection of another network and a case where the later-mentioned pass-through type interface portion that CPU and the like can be mounted on the displaying device itself is used.

UDP header, followed by the IP header, is added. In this embodiment, on communication protocol of Ethernet, taking into consideration its real-time property, UDP/IP protocol is adopted. As the UDP header, port numbers (optional) of the transmitting end and the receiving end are identified, respectively.

Payload to which actual information is inserted includes frame header and payload body. A structure of the frame header can be voluntarily set by a user. In this embodiment, as shown in Fig. 19B, the frame header includes version section, hop number section, command section, index section and image information sections (two sections). Each of them has two bytes.

To the version section, version information of this control frame is added. The hop number section is updated by incrementing the hop number by one each time when it passes through the displaying device 11. The system control devices 300A and 300B can know number of the displaying devices 11 connected between the system control devices 300A and 300B based on the hop number X when it passes through the last displaying device 11N. If the hop number X is stored in each of the displaying devices 11, they can find how-manieth device this displaying device 11 is from the first displaying device, thereby utilizing it as identification information of this displaying device. For example, when X=i, this expression X=i is stored in an i-th displaying device so that this displaying device can know that it is the i-th displaying device. An initial value of hop number X is set to zero.

To the command section, command information for fixing that this control frame performs how kind of processing is inserted. Fig. 20 illustrates an embodiment of the command information according to the invention.

The command information includes an initialization command (No.1) for making any one of the displaying devices 11 initialized, a command (No.2) (displaying-device-searching command) for assigning MAC address individually defined by a user to each of the displaying devices 11, an image-data-transferring command (No. 10) for distributing the still image data, and a light emission command (No. 7) (strobe-lighting command) for transmitting light-emitting signal to each of the displaying devices 11.

The command information also includes delay time collection command (No. 3) for collecting delay time of each of the displaying devices 11, a light-emission-monitoring command, a temperature-monitoring command, a status-monitoring command for monitoring status of each of the displaying devices 11. The user can set a kind of the command optionally.

Referring back to the control frame shown in Fig. 19B, the index section of the payload header is used for identifying a specific displaying device 11i. If a user wants to send the still image data to the specific displaying device 11i, he or she may identify the hop number by this index section. This is because the hop number X corresponds to the specific displaying device 11i.

The image information section has four bytes. In payload format (B) shown in Fig. 19C, information for indicating number of sending pages of the still images (indicating how manieth frame) and information for specifying how manieth horizontal line in the this frame are inserted as information (Page/Line Nos) of first two bytes. This is because the still images have much amount of information so that it is divided into two parts to send them, which will be described. Information of the following two bytes for indicating a total number of sending lines is inserted.

If it is not the image-data-transferring command (No. 10) for transferring image data, this image information section of four bytes is blank like payload format (A) as shown in Fig. 19B and thus, null data is inserted thereinto.

Data of 1472 bytes, in this embodiment, is prepared as the payload body. If a total number of about 120 displaying devices 11 is supposed as described above, sufficient amount of the data to be processed by these bytes is secured.

In this embodiment, information is inserted by four-byte unit. These divided data sections relate to the hop number X respectively. For example, if the hop number X is zero, information of first data section is inserted to relate to it. If the hop number X is "i", information of i+1-th data section is inserted to relate to it. The information to be inserted is changed based on command information. If image data, all the information of 1472 bytes can be used.

Next, the following will be described on configurations of control frames when the command is inserted with reference to Fig. 21 or later. It is noted that the system control device 300A is set at the transmitting end and the system control device 300B is set at the receiving end.

Figs. 21A though 21H illustrates a configuration of the control frame used when the displaying-device-searching command is inserted and MAC addresses are assigned to the respective displaying devices 11A through 11N. As shown in Fig. 21A, a default value of the hop number X is set to zero. In the payload header, the hop number is set to X=0 and then, the displaying-device-searching command is inserted. The remaining portions are blank or meaningless data is inserted thereinto. Items of data #1 through #N of displaying devices, which are set by a user optionally, having three bytes, for example, are inserted into the payload body.

The control frame thus configured has non-real time response so that this control frame can be generated in the data-processing portion 322. The generated control frame is sent to the displaying device 11A through the sending buffer 332, the output switch 334, and the input/output portion 324 (see Fig. 17).

The displaying device 11A performs address detection. In this embodiment, the hop number X is referred therefor. If it is matched with the hop number X of its own displaying device, the payload body relating to this hop number X is referred so that the corresponding data #1 of displaying device is utilized as a part of MAC address of the displaying device 11A as its own displaying device (see Fig. 21B). For example, three bytes (byte number for serial number) of least significant bit (LSB) of MAC address are rewritten to the corresponding data #1 of displaying device. The rewritten MAC address is stored. The address-matching detection portion 252A stores it.

Next, the hop number X is incremented by one and then, it is sent to the other output port 244 (see Fig. 21C). Since in the adjacent displaying device 11B, the hop number X has been updated, the displaying device 11B can know that it relates to the displaying device 11B itself. A part of its MAC address is rewritten to the data #2 of displaying device 11B relating to the hop number X=1. The rewritten MAC address is stored (see Fig. 21D). The hop number X is then updated, i.e., incremented by one (namely, X=2). The updated frame is sent to the other output port 244 (see Fig. 21E).

Such the reference processing of the hop number X (address-matching detection processing), save processing of the corresponding data #i of the displaying device, a part-rewriting processing of MAC address and save processing thereof are performed in all of the displaying devices 11A through 11N (see Figs. 21F and 21G). The system control device 300B receives the control frame having the last updated hop number X (see Fig. 21H). The system control device 300B returns the received control frame to the system control device 300A of transmitting end.

In a result thereof, both of the system control devices 300A and 300B can know the set numbers of the displaying devices 11. Automatic assignment of MAC address and saving processing thereof are complete in this time.

Thus, setting of MAC address separately and independently from the displaying devices avoids references of any of the displaying devices. This allows a new MAC address to be easily assigned to the displaying device if the displaying device is exchanged or newly mounted.

If only closed network as shown in Fig. 15 constitutes the image- displaying apparatus 200, a case where MAC address is used occurs too. I, however, the pass-through typed interface portion 240 has three ports, which will be described later, one port is connected with CPU board. If so, the MAC address can be used for identifying this CPU board. Alternatively, the individually applied MAC address is used when a network constituting this pass-through typed interface portion 240 is connected with another network and image data from another network is displayed.

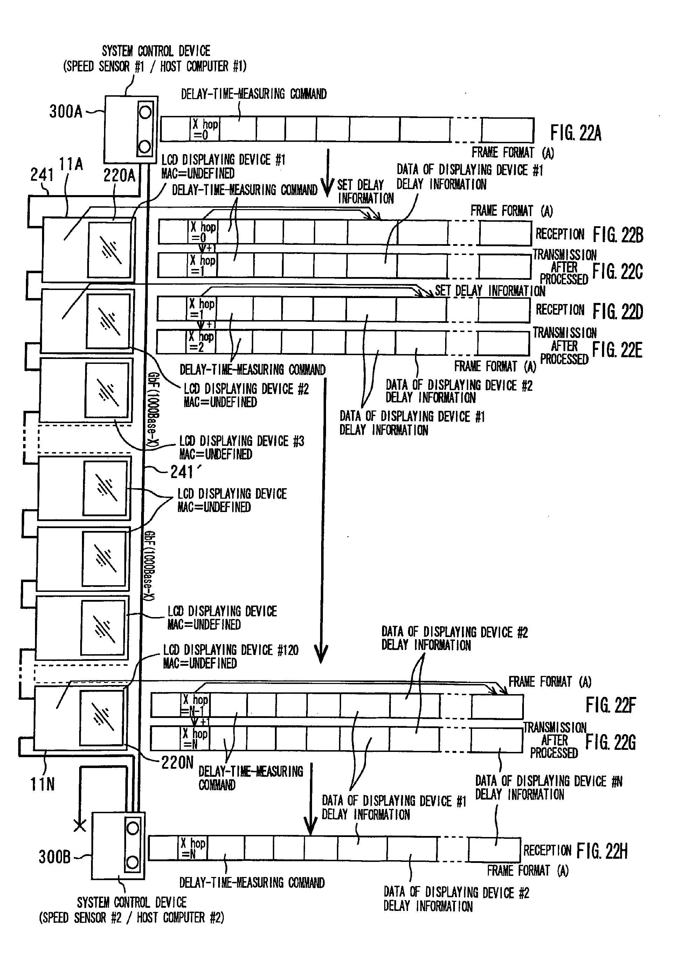

Figs. 22A though 22H illustrates a configuration of the control frame used when measuring the inherent delay time of the respective displaying devices 11A through 11N. This control frame also has non-real time response.

As shown in Fig. 22A, the hop number X is reset to zero and a command for collecting delay time (delay-time-measuring command) is set. The remaining portions are blank. Thus, the payload body is also blank. The system control device 300A transmits this control frame. The first displaying device 11A receives it (see Fig. 22B).

Since the hop number X of the first displaying device 11A is zero, the displaying device 11A determines that it destines for the displaying device 11A itself. The displaying device 11A analyzes the command and read delay time information of the displaying device 11A to set it to the corresponding data section as the data #1 of the display device 11A (see Fig. 22B). Next, the hop number X is incremented by one and then, it is sent to the other output port 244 (see Fig. 22C). The adjacent displaying device 11B analyzes the received hop number X so that the displaying device 11B determines that it destines for the displaying device 11B itself to analyze the command similarly (see Fig. 22D). Since it is a set command of the delay time information, the displaying device 11B reads its delay time information to write it on the corresponding data section as the data #2 of displaying device 11B (see Fig. 22D). The hop number X is updated at the same time and sent (see Fig. 22E).

Such the analysis of the hop number X and the command, the write (set) processing of the delay time information are performed up to the last displaying device 11N (see Fig. 22F). The last displaying device 11N then writes the delay time information and the hop number X is updated and sent (see Fig. 22G). The system control device 300B receives the result thereof and returns it to the system control device 300A (see Fig. 22H). This processing enables all the displaying devices 11A through 11N to terminate acquisition of delay time information and to be saved.

The system control devices 300A and 300B computes and stores the light emission delay time of the light emission control portion 262 in each of the displaying device 11A through 11N. If n items of the displaying devices 11 are set, for example, the light emission delay time D1 of the first displaying device 11A becomes D1=(n-1)*Dn where Dn indicates inherent delay time of the first displaying device 11A. Similarly, the light emission delay time Dn of the last displaying device 11n becomes zero.

Thus, if items of the light emission delay time are set so that the displaying devices 11A through 11N can emit light with them being shifted by their inherent delay time, the displaying parts 220A through 220N in the n items of the displaying devices 11A through 11N can be flashed (strobe-lighted) at the same time in unison.

The control frame of Fig. 22 is used for collecting various kinds of status information such as light-emission-monitoring information, temperature-monitoring information, and displaying-device-status-monitoring information. Every these control frames have non-real time responses.

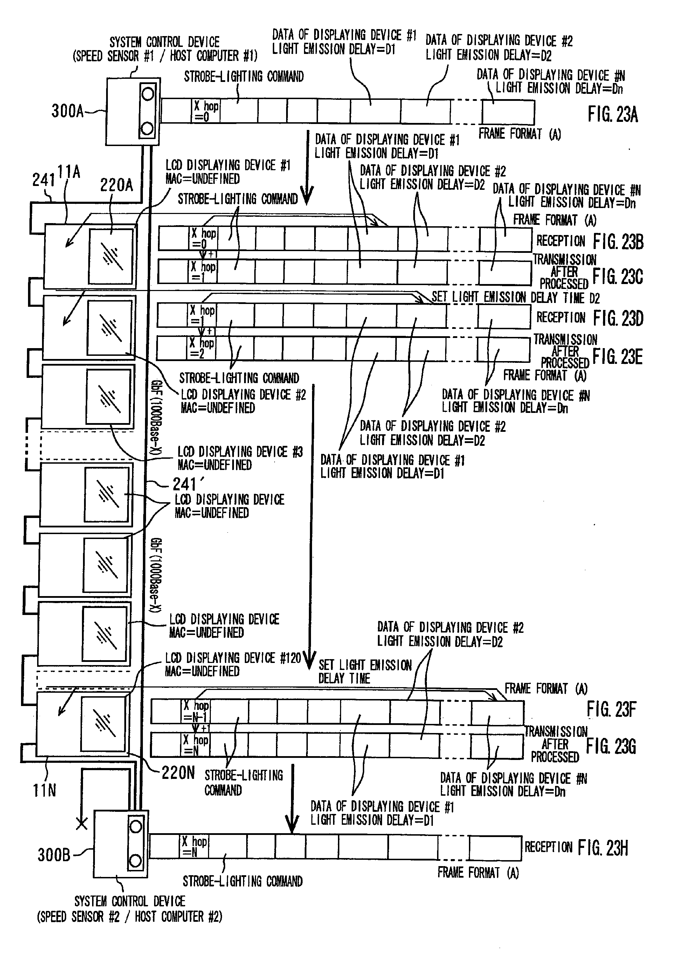

The light emission delay time information computed on the basis of the delay information on each of the displaying devices 11A through 11N that is collected as shown in Fig. 22 is distributed to the respective displaying devices 11A through 11N as the light emission information. Fig. 23 illustrates a configuration of the control frame in this case. This control frame has real time response. The real-time-processing portion 330 shown in Fig. 17 generates this control frame.

In this control frame, the hop number X is reset to zero and a light emission command is set as a command (see Fig. 23A). In the payload body, to the data section corresponding to each of the displaying devices 11A through 11N, items of the computed light emission delay time information ((n-1)*Dn, (n-2)*Dn, ...) are set. The system control device 300A transmits this control frame. The first displaying device 11A receives it (see Fig. 23B).

Since the hop number X of the first displaying device 11A is zero, the displaying device 11A determines that it destines for the displaying device 11A itself. The displaying device 11A analyzes the command and read the light emission delay time information of the displaying device 11A from the corresponding data section with referring to the hop number X to write it on the light emission control device 262 where it is saved (see Fig. 23B) .

Next, the hop number X is incremented by one and then, it is sent to the other output port 244 (see Fig. 23C) . The adjacent displaying device 11B analyzes the received hop number X so that the displaying device 11B determines that it destines for the displaying device 11B itself to analyze the command similarly (see Fig. 23D). Since it is a write command of the light emission delay time information, the displaying device 11B writes the light emission delay time information ((n-1)*Dn) to the light emission control device 262 of the displaying device 11B (see Fig. 23D). The hop number X is updated at the same time and sent (see Fig. 23E).

Such the analysis of the hop number X and the command, the write processing of the light emission delay time information are performed up to the last displaying device 11N (see Fig. 23F). The last displaying device 11N then writes the light emission delay time information and the hop number X is updated and sent (see Fig. 23G). The system control device 300B receives the result thereof and returns it to the system control device 300A (see Fig. 23H).

This processing enables the light emission delay time information to be transmitted to all the displaying devices 11A through 11N. In this embodiment, when this control frame reaches the displaying devices 11N, the first displaying devices 11A is waiting for light-emitting by just n*Dn minutes. This allows light-emitting device 230 A through 230N oh all the displaying devices 11A through 11N to be light-emitted (strobe-lighted) at the same time. This secures the real time response of the light emission command and maintains their isochrony, thereby implementing flashing control processing at the same time in unison.

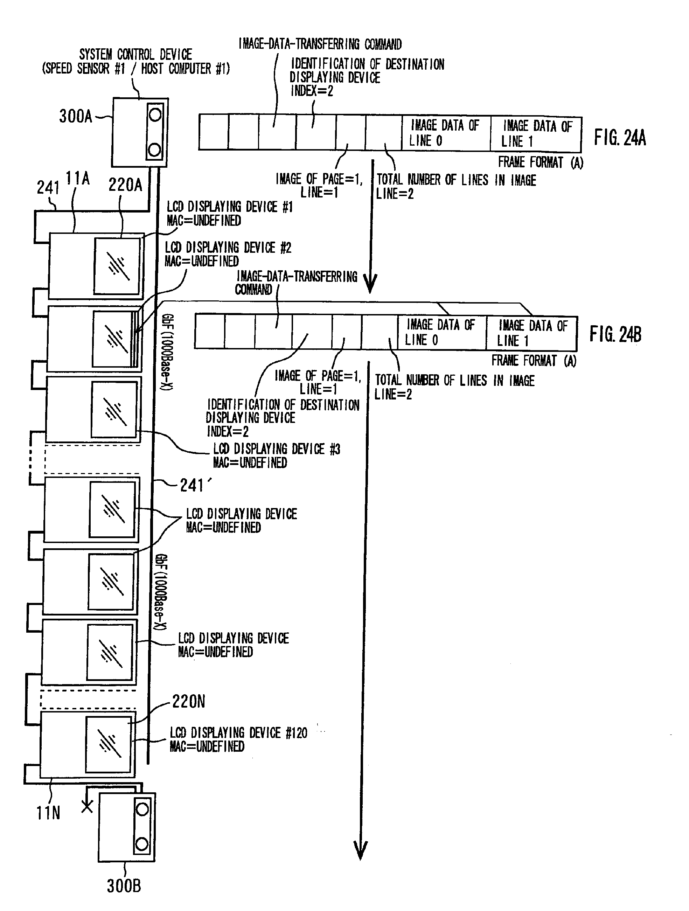

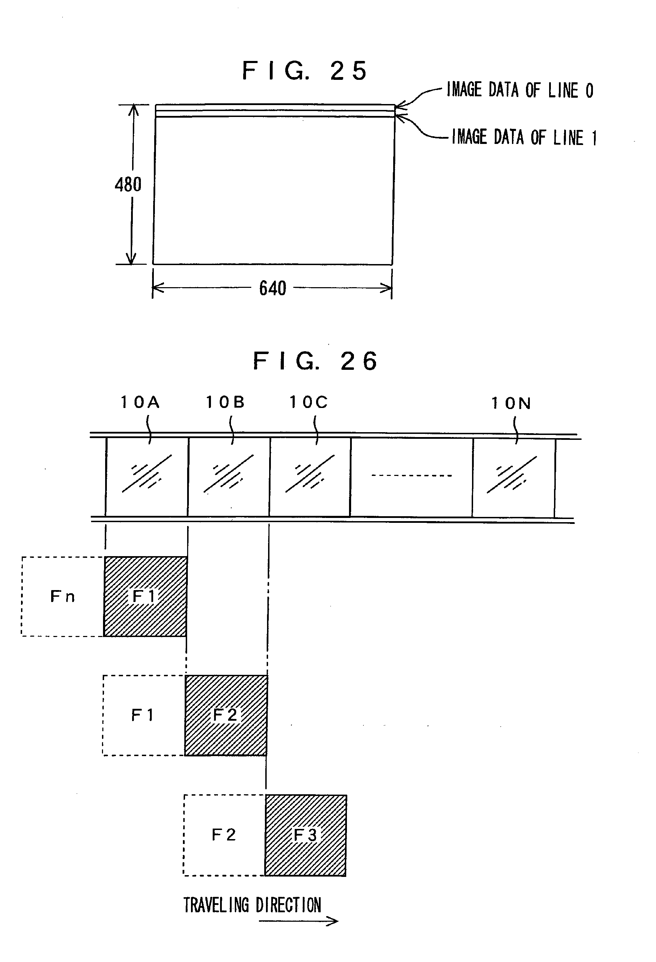

Figs. 24A and 24B illustrate a configuration of the control frame used when image data is transmitted. This configuration will be described using a case where the image data (image data of first page) of one frame that is constituted of 640*480 pixels is transmitted in turn by two-line unit, as shown in Fig. 25.

The image-data-transferring command is fist used as a command, as shown in Fig. 24A, and in a header for the image data, items of data indicating page data (Page) of one, line number (Line No) of one, and a total number of transfer line (Line Num) of two are inserted into the respective corresponding headers.

In addition to these payload headers, actual image data of two lines is set to the payload body. Further, the index in the payload header is utilized as identification information that the image data is distributed to any displaying device. For example, when the image data is distributed to a second displaying device 11B, information of Index=2 is set, s shown in Fig. 24A.

The real-time-processing portion 330 of the system control device 300A generates and transmits the control frame thus configured. Since the index information is not matched in an analysis in the first displaying device 11A, this displaying device 11A serves as merely a delay element. The control frame information received at the input port 242 is sent to the output port 244 as it is.

When the next displaying device 11B analyzes the payload header so that the displaying device 11B determines that it destines for the displaying device 11B itself, the index information is referred and it matches the index information of it own displaying device, thereby allowing the image data inserted into the corresponding payload body to be captured by the image frame buffer 260 (see Fig. 24B).

When the image frame buffer 260 stops capturing the image data, the control frame is again transmitted toward the output port 244. In the following displaying devices 11C through 11N, the index information of it is different from the index information of their own displaying devices 11C through 11N so that thy serves as merely a delay element. Thus, the image data is distributed to only a target displaying device 11B. This distribution operation is maintained by a period of time when all 480 lines have been transmitted.

When distribution of the image data to one displaying device 11i stops, the distribution of the image data to the next displaying device 11i+1 now starts. In this case, image data of "i" frame(s) is distributed, so that Page=i is set.

If displaying device's software or firmware as shown in Fig. 20 is transferred, this processing can identify any displaying device so that such the transfer processing shown in Figs. 24A and 24B.

In description on Figs. 24A and 24B, it has been described that the image data of one frame is distributed to the respective displaying devices 11A through 11N. It is depended on a traveling speed of the passed electric train 4 whether the image data to be distributed to each of the displaying devices 11A through 11N is of one frame or the image data of one frame exists over the adjacent displaying devices.

In other words, the image of one frame can be displayed using two adjacent displaying devices depending on a traveling speed of the passed electric train 4. Thus, the image data to be distributed to each of the displaying devices is determined on the basis of a traveling speed of the passed electric train 4.

Fig. 26 illustrates a case where image of one frame is displayed on one displaying device. For example, if a breadth (size) of displaying part 220 of the displaying device 11 is 47 cm, the speed of the electric train 4 when the image of one frame is displayed on one displaying device is 50 km/h in order to display thirty still images per second. This speed is set as a reference speed for explanation. As shown in Fig. 26, if the electric train 4 travels at the reference speed, the image data of one frame is distributed to each of the displaying parts 220A through 220N and displayed on thereon.

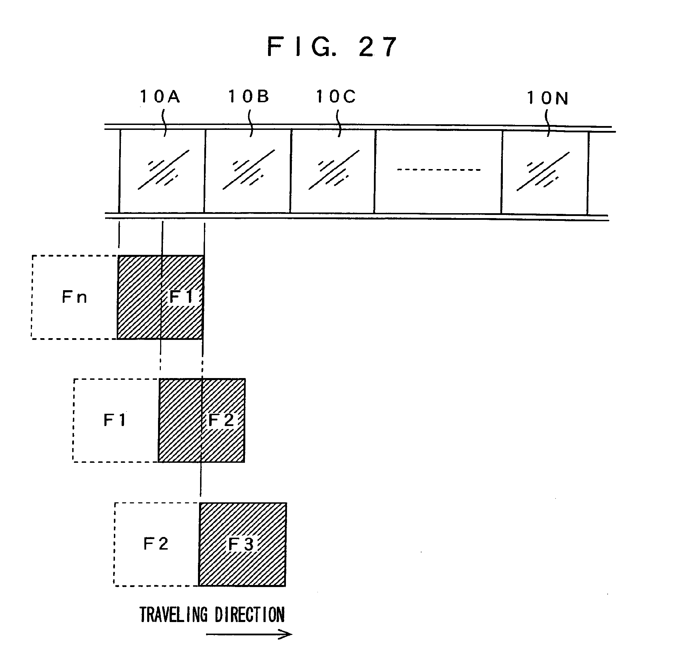

Fig. 27 illustrates a case where the image is displayed if the electric train travels at a half speed of the reference speed. If the electric train 4 travels at a half of the reference speed, distribution of image data is controlled so that the image of frame F1 is displayed on the displaying device 11A and the image of frame F2 is displayed on a half of the displaying device 11A and a half of the adjacent displaying device 11B.

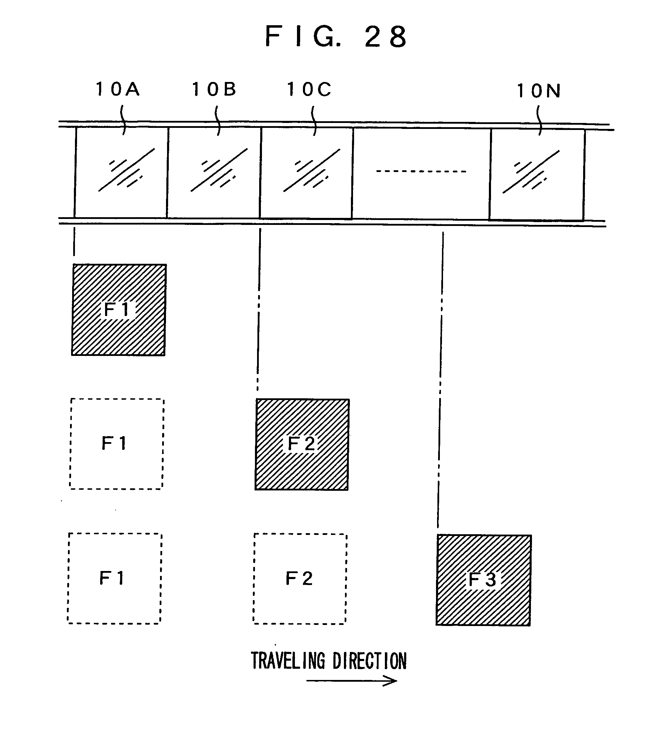

Fig. 28 illustrates a case where the image is displayed if the electric train travels at a speed that is double the reference speed. If the electric train 4 travels at a speed that is double the reference speed, the image of one frame is displayed on every other displaying device (displaying devices 11A, 11C, and so on). Thus, controlling the image data to be distributed based on a travelling speed of the electric train allows stable motion images to be naturally realized even if the electric train travels at any speeds. Of course, an interval between light emissions that the light-emitting device 230 controls based on a travelling speed of the electric train is controlled at the same time.

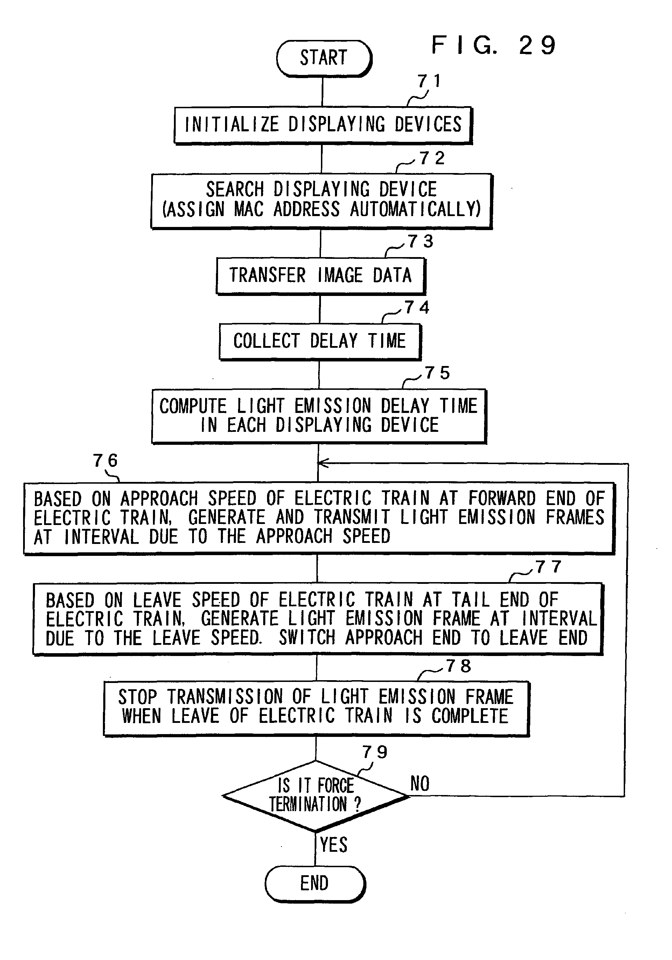

Fig. 29 illustrates a flowchart for indicating processing flow (outline) for implementing such the operations. This processing can be applied to even a case where each of the displaying devices 11 have no IP address.

As shown in Fig. 29, at Step S71, the displaying devices 11 is initialized, for example, memory is initialized. At Step S72, the displaying devices 11 are searched and MAC addresses set by a user are assigned to all the displaying devices 11 automatically. This automatic assignment of MAC addresses can be performed as necessary but, when the displaying device has pass-through typed interface portion with three ports, which will be described later, the automatic assignment of MAC addresses is performed.

At Step S73, image data is transferred. At Step S74, delay time in each of the display devices 11 is then collected and inherent delay time of its own displaying device is stored in each displaying device 11. At Step S75, light emission delay time of each of the displaying devices 11 is computed at a stage where the collection of the delay time terminates to save its value.

Then, it waits for detecting an approach of the electric train 4. If detecting the approach of the electric train 4, light emission frames are generated at an interval based on its traveling speed (approach speed) as a control frame having real time response and transmitted, at Step S76. If detecting the leave of the electric train 4 therefrom, light emission frames are generated at an interval based on its leaving speed as a control frame having real time response and transmitted, at Step S77. Namely, exchange of the light emission frames is carried out. Of course, traveling speed of the electric train that is passing along the displaying devices 11 is fixed, it is possible to perform a strobe light using the light emission frame generated by the system control device 300A of approaching end.

Next, if it has been detected that the leave of the electric train 4 is complete, the transmission of the light emission frames stops at Step S78. Then, it again waits for detecting an approach of the electric train 4 with out force termination at Step S79

It is also necessary to control the transmission of the image data according to a traveling speed of the electric train. Thus, actually, at Steps S76 and S77, a traveling speed of the electric train is detected and then, the image data is transferred based on this traveling speed of the electric train, not the image data is transferred before the traveling speed of the electric train is detected.

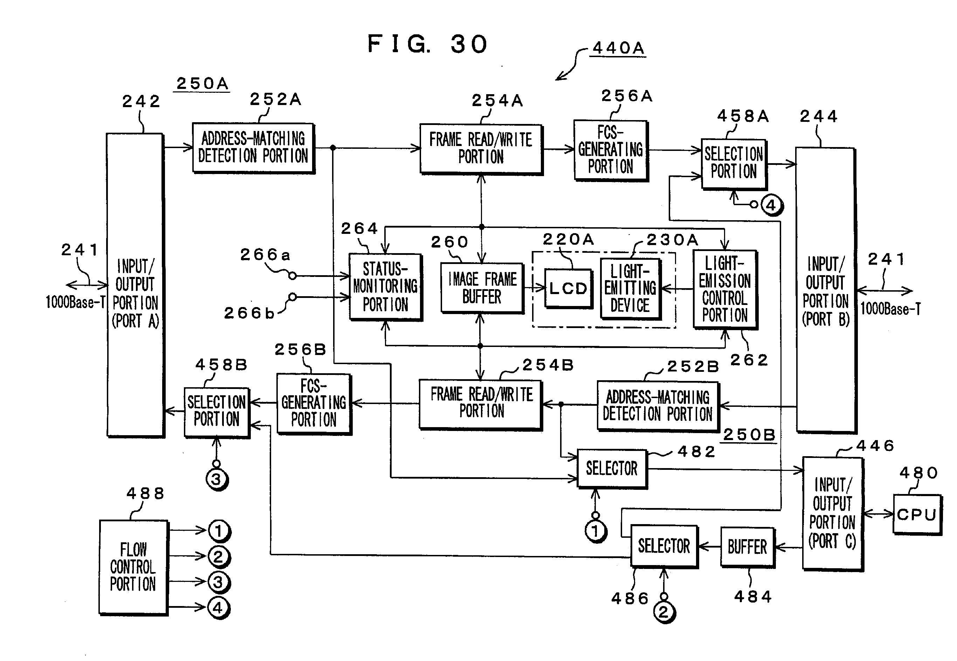

Alternatively, referring to Fig. 30, the following will be described on an embodiment of the image-displaying apparatus having another pass-through typed interface portion 440. In these embodiments, same members as those in the above embodiments are represented using like reference numbers and/or characters, the description of which will be omitted.

Although it has been described that the above pass-through typed interface portion 240 has two ports, the pass-through typed interface portion 440 has three ports, as shown in Fig. 30. The following will be described using the displaying device 11A as an example thereof.

In this embodiment, a third port C (input/output portion) 446 is provided. To the third port 446, an Ethernet port of CPU board 480 is connected. In order to give or receive information from the CPU board 480, outputs of the address-matching detection portions 252A and 252B located on each of the ports 242 and 244 are supplied to the third port 446 through a selector 482.

Buffer 484 for a sending timing adjustment once captures information (control frame of CPU side) sent from the CPU board 480 via the port 446. Selector 486 selects whether the control frame of CPU side output from the buffer 484 should be transmitted to the first port 242 or the second port 244. If it is transmitted to the first port 242, the control frame of CPU side is supplied to selection portion 458B where any one of the control frame of CPU side and the control frame passed through the second port 244 is selected and output to the first port 242.

Similarly, if it is transmitted to the second port 244, the control frame of CPU side is supplied to selection portion 458A where any one of the control frame of CPU side and the control frame passed through the first port 242 is selected and output to the second port 244.

The control frame of CPU side is a frame corresponding to TCP/IP protocol.

In order to realize such the processing, flow control portion 488 for monitoring header information of each of the transferred control frames (including control frame of CPU side) to control the selectors 482 and 486 and the selection portions 458A and 458B is provides. This flow control portion 488 performs various kinds of control processing as follows:
(1) If receiving an ordinary control frame (having non-real time response) from the first port 242 during transmitting a control frame from the third port 446 to the second port 244, the buffer 484 once stores the control frame received from the first port 242 and when sending from the third port 446 is complete, the control frame stored in the buffer 484 is transmitted to the second port 244 after waiting for interframe gap (IFG).
(2) If receiving a control frame having real time response from the first port 242 during transmitting a control frame from the third port 446 to the second port 244, the frame buffer 260 once stores the control frame received from the first port 242 and the sending from the third port 446 is stopped, it waits for IFG period, thereby reading the storage control frame of the buffer 484 to transmit it to the second port 244.
   This processing eliminates an assurance of isochrony so that if a control frame having real time response such as the light emission frame is transmitted, it is necessary for transmitting a bus reserve frame from the system control device 300A or 300B by time T (=(numbers of the displaying devices)*IFG+MTU) preceding the transmission when largest time of one frame (largest transmission unit) is maximum transmission unit (MTU).
(3) If receiving an ordinary control frame from the third port 446 during transmitting a control frame from the first port 242 to the second port 244, the processing similar to an ordinary switching hub is performed.

Since the CPU board 480 has IP address, MAC address automatically assigned by a user is used when special information is distributed to a necessary displaying device 11 or if another network is connected to the CPU board, it communicates another network. Using the CPU board 480 allows information other than the above status information to given and received. Thus, using the pass-through typed interface portion 240 having three ports allows its general versatility to be increased.

According to the image-displaying apparatus 200 of this embodiment, communication path (communication cable) can be reduced, thereby improving frequency of setting operations. The image-displaying apparatus 200 of this embodiment further has the following excellent effects:
(1) Since MAC address can be assigned automatically, another MAC address assignment allows any relation between MAC address and any one of the displaying devices to be eliminated when the displaying devices are exchanged, thereby improving a freedom of setting the displaying device.
(2) A low priced communication cable (1000 Base-T, 1000Base-TRX or the like) capable of transferring the information fast and available is utilized in this image-displaying apparatus 200 of this embodiment. The mage-displaying apparatus 200 has significantly improved amount of communication capacity as compared by the past one.
(3) The system control devices and the display devices can be daisy-chained, so that expansion of network is easily performed, thereby eliminating expansion devices such as a separate router and displaying device having router function. This allows the cost therefor to be decreased.
(4) Since the light-emitting signal is distributed using Ethernet frame, the real time data other than flashing information can be also distributed.
(5) The image-displaying apparatus of this embodiment can be set and operated in and on various locations such as an access tunnel in an amusement ground, on an up-and down path of an elevator, and a wall surface adjacent to the elevator, in addition to the tunnel of subway. A genre of image information is not particularly limited so that various kinds of images such as advertising images can be used.

The image-displaying apparatuses of the embodiments is applicable to any image-displaying system that a person who is travelling by the mobile object can view the motion image by flashing the still images constituting the motion image.

It should be understood that the invention is not limited to the above embodiments and that the invention can be applied equally well to other types of image-displaying apparatuses. While the foregoing specification has described preferred embodiment(s) of the present invention, one skilled in the art may make various modifications, combinations, sub-combinations and alteration to the preferred embodiment(s) depending on design requirements and other factors insofar as they are within the scope of the appended claims or the equivalents thereof.

## Claims

1. An image-displaying apparatus for providing motion image obtained by flashing still images at a predetermined time interval along a path of mobile object, thereby allowing a person who is travelling by the mobile object to view the motion image due to the still images, said apparatus comprising:
a displaying device including plural displaying parts with the displaying parts being aligned without any space therebetween along the path of mobile object, said displaying parts being positioned at sites where the person who is travelling by the mobile object is allowed to view the displaying parts from the mobile object;
a supplying device for supplying to the displaying device an image signal on plural still images constituting the motion image;
a speed-detecting device for detecting a running speed of the mobile object; and
a display-controlling device for controlling the supplying device to display the plural still images, respectively, at their set timing on their set positions of the displaying device based on the running speed of the mobile object detected by the speed-detecting device.

2. The image-displaying apparatus according to Claim 1, wherein the display-controlling device controls the supplying device:
to sets as a reference speed a running speed of the mobile object when a distance that the mobile object runs for a period of time when image of one frame is displayed and a breadth of each of said still images are in a one-to-one relationship;
if a running speed of the mobile object is smaller than a reference speed, to display the plural still images at their set timing with the images being shifted by smaller distance from each other than the distance that the mobile object runs at the reference speed, based on the running speed of the mobile object; and
if a running speed of the mobile object is larger than a reference speed, to display the plural still images at their set timing with the images being shifted by larger distance from each other than the distance that the mobile object runs at the reference speed, based on the running speed of the mobile object.

3. The image-displaying apparatus according to Claim 1, wherein the displaying device allows for displaying the motion image due to an arbitrarily set breadth of the still images.

4. The image-displaying apparatus according to Claim 1, wherein the displaying device includes plural displaying parts with the displaying parts being aligned without any space therebetween along the path of mobile object, said displaying parts being constituted of any one of liquid crystal display equipment, plasma display equipment, and organic electroluminescent display equipment.

5. The image-displaying apparatus according to Claim 1, wherein the displaying device includes plural projectors with screens of the projectors being aligned without any space therebetween along the path of mobile object.

6. The image-displaying apparatus according to Claim 5, wherein the projectors allows the plural still images to be displayed thereon at the same time.

7. The image-displaying apparatus according to Claim 1, further comprising storage device for storing data of the still images, said data corresponding to plural programs, wherein the data of the still images is supplied from any one of the image-displaying apparatus and an outside distributor through a network.

8. The image-displaying apparatus according to Claim 7, further comprising selection device for selecting a program to be displayed from the plural programs, wherein the display-controlling device controls the selection device to alter the image signal of the still images, said image signal being supplied to the displaying device, for at least each unit of the program at any one of a set period of time and an arbitrary period of time.

9. An image-displaying apparatus for providing motion image obtained by flashing still images at a predetermined time interval along a path of mobile object, thereby allowing a person who is travelling by the mobile object to view the motion image due to the still images, said apparatus comprising:
a displaying device including plural displaying parts with the displaying parts being aligned without any space therebetween along the path of mobile object, said displaying parts being positioned at sites where the person who is travelling by the mobile object is allowed to view the displaying parts images from the mobile object;
a supplying device for supplying to the displaying device an image signal on plural still images constituting the motion image; and
a display-controlling device for controlling the supplying device to display the plural still images, respectively, at their set timing on their set positions of the displaying device based on information about a previously set running speed of the mobile object.

10. An image-displaying method for displaying motion image in a displaying device for displaying the motion image obtained by supplying to the displaying device an image signal on plural still images constituting the motion image, said displaying device including plural displaying parts that are aligned without any space therebetween along a path of mobile object by which a person is travelling, thereby allowing a person who is travelling by the mobile object to view the motion image due to the still images, said method comprising the steps of:
obtaining running speed information of the mobile object; and
displaying the plural still images at their set timing with the images being shifted from each other by their set distances, based on the running speed information thus obtained of the mobile object.

11. An image-displaying apparatus comprising:
plural displaying devices each having a pass-through typed interface portion, said displaying devices being aligned with the devices having a predetermined space; and
a pair of system control devices each for distributing at least still images constituting motion image to each of the plural displaying devices, said system control devices being positioned at a starting end and a terminating end of these plural displaying devices,
wherein the plural displaying devices and the system control devices are daisy-chained to each other and the pass-through typed interface portion serves as fixed delay element under its cut-through operating condition.

12. The image-displaying apparatus according to Claim 11, wherein each of the plural displaying devices includes image-displaying part and light-emitting device corresponding to the image-displaying part.

13. The image-displaying apparatus according to Claim 11, wherein information on the still images is communicated under UDP/IP protocol on Ethernet; and
wherein information proper to the pass-through type is capsuled and the capsuled information is inserted into a payload of the UDP protocol.

14. The image-displaying apparatus according to Claim 13, wherein the information proper to the pass-through type includes command information for distributing the information on the still images, command information for obtaining delay information inherent to the pass-through typed interface portion provided in each of the displaying devices, and command information for distributing light-emission-delay information to perform simultaneously flashing display in unison.

15. The image-displaying apparatus according to Claim 14, wherein the light-emission-delay information is generated based on the delay information inherent to the pass-through typed interface portion.

16. The image-displaying apparatus according to Claim 13, wherein hop number included in the information proper to the pass-through type is used as identification information of each of the daisy-chained displaying devices.

17. The image-displaying apparatus according to Claim 11, wherein the pass-through typed interface portion has two ports; and
wherein it is determined that received information is not destined for its own displaying device, the pass-through typed interface portion serves as fixed delay element for sending the information received at a port out of the other port as it is.

18. The image-displaying apparatus according to Claim 11, wherein the pass-through typed interface portion has three ports; and
wherein a first port and a second port serve as ports for daisy-chain connection and a third port serves as a port for Ethernet connection provided in CPU board installed inside thereof.

19. The image-displaying apparatus according to Claim 18, wherein as the CPU board, CPU board to which IP address is applied is used.
